# EUROPEAN PATENT SPECIFICATION

(11) **EP 4 084 414 B1**
(45) Date of publication and mention of the grant of the patent: **19.11.2025**
(21) Application number: 21825507.3
(22) Date of filing: 15.06.2021
(51) Int. Cl.: H04L 41/0806, H04L 43/062, H04L 43/12, H04L 43/026, H04L 43/08

(54) **DETECTION CONFIGURATION AND PROCESSING METHODS AND SYSTEMS, CONTROL AND COMMUNICATION DEVICES, AND STORAGE MEDIUM**
VERFAHREN UND SYSTEME ZUR DETEKTIONSKONFIGURATION UND -VERARBEITUNG, STEUERUNGS- UND KOMMUNIKATIONSVORRICHTUNGEN UND SPEICHERMEDIUM
PROCÉDÉS ET SYSTÈMES DE CONFIGURATION ET DE TRAITEMENT DE DÉTECTION, DISPOSITIFS DE COMMANDE ET DE COMMUNICATION, ET SUPPORT DE STOCKAGE

(30) Priority: 18.06.2020 CN 202010559107
(43) Date of publication of application: 02.11.2022
(73) Proprietor: ZTE Corporation, Shenzhen, Guangdong 518057 (CN)
(72) Inventor: PENG, Shaoli, Shenzhen, Guangdong 518057 (CN); TANG, Sicheng, Shenzhen, Guangdong 518057 (CN); LU, Qun, Shenzhen, Guangdong 518057 (CN); GAO, Peng, Shenzhen, Guangdong 518057 (CN)
(74) Representative: Savi, Massimiliano
(86) International application number: PCT/CN2021/100131
(87) International publication number: WO 2021/254334

(56) References cited:
- CN-A- 109 743 340
- CN-A- 110 545 196
- CN-A- 110 971 445
- US-A1- 2019 288 938
- US-A1- 2019 349 290
- SONG H ET AL: "Postcard-based On-Path Flow Data Telemetry; draft-song-ippm-postcard-based-telemetry-07.txt", no. 7, 14 April 2020 (2020-04-14), pages 1 - 12, XP015139120, Retrieved from the Internet <URL:https://tools.ietf.org/html/draft-song-ippm-postcard-based-telemetry-07> [retrieved on 20200414]
- CHENG CHINA MOBILE X MIN ZTE T ZHOU HUAWEI X DONG FIBERHOME Y PELEG BROADCOM W: "Encapsulation For MPLS Performance Measurement with Alternate Marking Method; draft-cheng-mpls-inband-pm-encapsulation-03.txt", no. 3, 7 March 2020 (2020-03-07), pages 1 - 12, XP015138186, Retrieved from the Internet <URL:https://tools.ietf.org/html/draft-cheng-mpls-inband-pm-encapsulation-03> [retrieved on 20200307]
- BROCKNERS S BHANDARI CISCO D BERNIER BELL CANADA F: "In-situ OAM Deployment; draft-brockners-opsawg-ioam-deployment-00.txt", 30 October 2019 (2019-10-30), pages 1 - 22, XP015135861, Retrieved from the Internet <URL:https://tools.ietf.org/html/draft-brockners-opsawg-ioam-deployment-00> [retrieved on 20191030]

## Description

### TECHNICAL FIELD

Embodiments of the present application relate to, but not limited to, the technical field of communication, and in particular to, but not limited to, detection configuration and processing methods and systems, control and communication devices, and a storage medium.

### BACKGROUND

IOAM (in-suit OAM, or referred to as in-band OAM) means encapsulating to-be-carried Operation Administration and Maintenance (OAM) information and data in user data messages, which are sent along with user data without the need for additional control plane messages to send OAM data. IOAM is a technology to directly detect service flows, has the advantages of real-time performance, high measurement accuracy, and true reflection of the forwarding quality of actual service messages on the network, can quickly identify faulty nodes or faulty links in an operating network, and is strongly favored by mobile 5G networks.

In some cases, during IOAM detection, a centralized controller is required to configure nodes through which a target service flow flows. Then, the nodes can generate detection report instances according to the configuration and collect and report detection data based on the detection report instances. Therefore, in some cases, the centralized controller is required to accurately calculate a transmission path of the target traffic flow. Otherwise, the centralized controller cannot configure the nodes through which the target service flow actually flows, and cannot have the nodes perform IOAM detection for the target service flow. Besides, if more protection paths are set for one service flow in the network, the centralized controller cannot determine an actual transmission path of the target service flow prior to transmission of the target service flow. Therefore, in order to ensure normal execution of the IOAM detection on the target service flow, the centralized controller needs to configure all possible nodes through which the target service flow flows, which not only leads to heavy workload of configuration of the centralized controller, but also causes many nodes to generate detection report instances after the configuration of the centralized controller to allocate detection resources for the target service flow, ultimately resulting in a waste of resources because the target service flow does not flow therethrough.

SONG H ET AL: "Postcard-based On-Path Flow Data Telemetry; draft- song-ippm-postcard-based-telemetry-07.txt", POSTCARD-BASED ON-PATH FLOW DATA TELEMETRY; DRAFT- SONG-IPPM-POSTCARD-BASED-TELEMETRY-07.TXT; INTERNET- DRAFT: IPPM, INTERNET ENGINEERING TASK FORCE, IETF; STANDARDWORKINGDRAFT, INTERNET SOCIETY (ISOC) ,no. 7 14 April 2020 (2020-04-14), pages 1 -12, XP015139120, relates to a variation of the Postcard-Based Telemetry(PBT), the marking-based PBT. Unlike the instruction-based PBT, as embodied in [I-D.ietf-ippm-ioam-direct-export], the marking-based PBT does not require the encapsulation of a telemetry instruction header so it avoids some of the implementation challenges of the instruction-based PBT.

US 2019/288938 A1 relates to a method which is provided to configure a communication network to perform telemetry of OAM data, implemented in a network management device. A packet flow ID is identified, and a head node and an end node for the packet flow are determined from the flow ID. A marking command is sent to the head node, causing it to mark some packets in the packet flow. An unmarking command is sent to the end node, causing it to unmark marked packets. A path configuration command is received, including a list of nodes through which a marked packet passed. A command is sent to the nodes in the list, configured to cause the nodes to collect specified OAM flow data relating to marked packets. Such data for an individual packet is received after being collected from the nodes in the list. The OAM flow data is used to improve performance of the network.

CHENG CHINA MOBILE X MIN ZTE T ZHOU HUAWEI X DONG FIBERHOME Y PELEG BROADCOM W: "Encapsulation For MPLS Performance Measurement with Alternate Marking Method; draft-cheng- mpls-inband-pm-encapsulation-03.txt", ENCAPSULATION FOR MPLS PERFORMANCE MEASUREMENT WITH ALTERNATE MARKING METHOD; DRAFT-CHENG-MPLS-INBAND-PM- ENCAPSULATION-03.TXT; INTERNET-DRAFT: MPLS WORKING GROUP, INTERNET ENGINEERING TASK FORCE, IETF ,no. 3 7 March 2020 (2020-03-07), pages 1-12, XP015138186, relates to the encapsulation for MPLs performance measurement with alternate marking method, which performs flow-based packet loss, delay, and jitter measurements on live traffic.

BROCKNERS S BHANDARI CISCO D BERNIER BELL CANADA F: "In- situ OAM Deployment; draft-brockners-opsawg-ioam-deployment-OO.txt", IN-SITU OAM DEPLOYMENT, DRAFT-BROCKNERS-OPSAWG-IOAM- DEPLOYMENT-OO.TXT; INTERNET-DRAFT: OPSAWG, INTERNET ENGINEERING TASK FORCE, IETF; STANDARDWORKINGDRAFT, INTERNET SOCIETY (ISOC) 4, RUE DES FALAISES , 30 October 2019 (2019-10-30), pages 1 -22, XP015135861, relates to In-situ operations, Administration, and Maintenance (IOAM) records operational and telemetry information in the packet while the packet traverses a path between two points in the network. This document provides a framework for IOAM deployment and provides best current practices.

### SUMMARY

The invention is set out in the appended set of claims.

According to some embodiments of the present application, detection configuration and processing methods and systems, control and communication devices, and a storage medium are provided to solve one of the related technical problems at least to some extent, for example, in some cases, IOAM detection on the target service flow depends on the accuracy of calculation on the transmission path by the centralized controller, which easily leads to the failure of IOAM detection, heavy workload of configuration of the centralized controller, and a serious waste of resources.

### BRIEF DESCRIPTION OF DRAWINGS

FIG. 1 is a schematic diagram of IOAM detection on a service flow according to Embodiment one of the present application;
FIG. 2 is a flowchart of an IOAM detection processing scheme according to Embodiment one of the present application;
FIG. 3 is a schematic diagram of a report cycle according to Embodiment one of the present application;
FIG. 4 is a flowchart of determining, by a communication device, a detection report instance as an aging detection report instance according to Embodiment one of the present application;
FIG. 5 is another flowchart of determining, by a communication device, a detection report instance as an aging detection report instance according to Embodiment one of the present application;
FIG. 6 is yet another flowchart of determining, by a communication device, a detection report instance as an aging detection report instance according to Embodiment one of the present application;
FIG. 7 is a schematic diagram of an IOAM detection processing scheme implemented by an IOAM detection processing system according to Embodiment one of the present application;
FIG. 8 is a flowchart of an IOAM detection control scheme according to Embodiment two of the present application;
FIG. 9 is a schematic diagram of a format of an IOAM data header according to Embodiment two of the present application;
FIG. 10 is a schematic diagram of functional modules in an IOAM detection processing system according to Embodiment two of the present application;
FIG. 11 is a schematic flow diagram of a target service flow in a core network according to Embodiment three of the present application;
FIG. 12 is a schematic diagram of a hardware structure of a detection control device according to Embodiment four of the present application; and
FIG. 13 is a schematic diagram of a hardware structure of a communication device according to Embodiment four of the present application.

### DETAILED DESCRIPTION

In order to make objects, technical schemes and advantages of the present application clearer, embodiments of the present application are described in further detail below with reference to specific implementations in conjunction with the drawings. It is to be understood that specific embodiments described herein are intended only to explain and not to limit the present application.

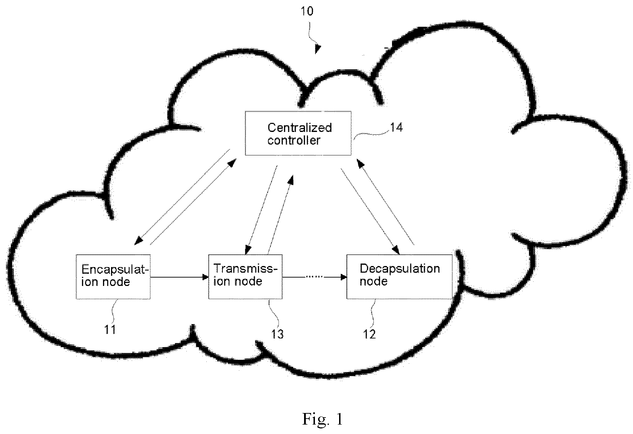

In some cases, when performing IOAM detection on a service flow, a centralized controller adds network nodes to participate in the detection to an IOAM domain corresponding to the target service flow, that is, a target IOAM domain. Referring to FIG. 1, the network nodes in target IOAM domain 10 may be classified into three roles: an encapsulation node (an edge node where a service flow enters an IOAM domain) 11, a decapsulation node (an edge node that leaves the IOAM domain) 12, and a transmission node (a node within the IOAM domain) 13. Then, a centralized controller 14 sends configuration information to each network node that is expected to participate in IOAM. The configuration information includes instance configuration information. The instance configuration information is actually delivered by the centralized controller 14 for a specific interface of the network node. The centralized controller 14 may indicate a corresponding interface and a flow direction of the target service flow at the interface in the instance configuration information. Each network node generates a detection report instance of the target service flow at the node according to the configuration information, including an inbound detection report instance and an outbound detection report instance, and allocates detection resources to the detection report instance, so as to perform IOAM detection on the target service flow. The encapsulation node 11 performs IOAM encapsulation on a message of the target service flow, and encapsulates information with IOAM detection capability to a stack bottom of a Multi-Protocol Label Switching (MPLS) label of a user data message. Then, a node through which the target service flow flows measures a network packet loss rate and a latency of the message with IOAM detection capability, and actively reports detection data to the centralized controller 14 through a high-speed information collector. The centralized controller 14 integrates and analyzes the detection data reported by each network node and presents analysis results. When the message of the target service flow flows through the decapsulation node 13, the decapsulation node 13 may perform IOAM decapsulation on the message.

Thus, in some cases, successful startup of IOAM detection for the target service flow depends largely on the correctness of configuration of the centralized controller. However, in an IOAM domain where the target service flow has multiple layers of protection and node interfaces carry a large amount of traffic, the centralized controller calculates a service path of the target service flow based on a whole network route. The operation is very complex and difficult, and it is difficult to ensure the correctness of IOAM detection configuration.

Besides, if a target service flow has multiple protection paths (i.e., alternate forwarding paths), the centralized controller may send the IOAM detection configuration to nodes and interfaces on all possible paths. As a result, resources for implementing IOAM detection allocated to network element nodes in the entire IOAM domain are several times more than IOAM detection resources actually required, which wastes the IOAM detection resources in the network nodes.

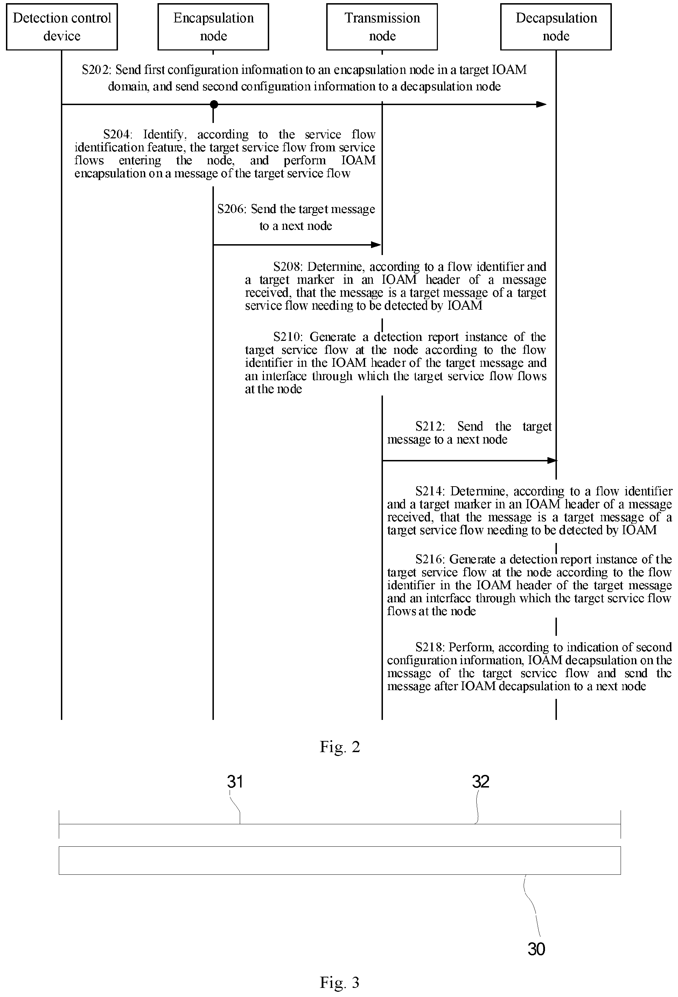

In order to solve the above problem, this embodiment provides an IOAM detection processing scheme. The IOAM detection processing scheme is realized by mutual coordination of a detection control device, an encapsulation node, a transmission node, and a decapsulation node. Referring to a flowchart of the IOAM detection processing scheme shown in FIG. 2 below.

At S202, a detection control device sends first configuration information to an encapsulation node in a target IOAM domain, and sends second configuration information to a decapsulation node.

The detection control device may be a centralized controller or an IOAM detection analysis platform. The detection control device may be deployed on one physical entity or distributed on at least two physical entities.

In a configuration stage of IOAM detection, the detection control device may send configuration information to a to-be-configured node in the target IOAM domain. The so-called target IOAM domain is an IOAM domain to perform IOAM detection on the target service flow. Based on the IOAM detection processing scheme according to this embodiment, the detection control device configures only the encapsulation node and the decapsulation node in the target IOAM domain. Therefore, the encapsulation node and the decapsulation node constitute the to-be-configured node. It is to be understood that, in the configuration stage of IOAM detection, the detection control device may do not need to configure the transmission node between the encapsulation node and the decapsulation node. Therefore, the detection control device may do not even need to concern about which transmission nodes exist between the encapsulation node and the decapsulation node and which interfaces the target service flow flows through.

The configuration information sent by the detection control device to the encapsulation node may be first configuration information. The first configuration information includes a flow identifier of the target service flow, a service flow identification feature, and a marking cycle.

The service flow identification feature is used for indicating the encapsulation node to identify the target service flow from service flows flowing into the node. The service flow identification feature may be a 5-tuple of an IP message, including a destination Internet Protocol (IP), a source IP, a destination User Datagram Protocol (UDP), a source UDP port number, and an IP Differentiated Services Code Point (DSCP) of the message. The service flow identification feature may also be a layer-2 Ethernet header content, including a destination Media Access Control (MAC) and a source MAC.

The marking cycle is used for indicating the encapsulation node to mark a message of the target service flow arriving at the encapsulation node within the marking cycle as a target message. Marking cycles and non-marking cycles are arranged alternately. The encapsulation node marks a message of the target service flow arriving within the marking cycle as a target message. An IOAM header of the target message carries a target marker, while an IOAM header of a non-target message may not include any target marker. Therefore, according to whether an IOAM header of a message of the target service flow includes a target marker, the node in the target IOAM domain can determine whether the message is the target message. A duration of a non-marking cycle may be predetermined by the detection control device with each node, or the duration of the non-marking cycle may be determined according to a length of the marking cycle. For example, the marking cycle has the same length as the non-marking cycle, the length of the non-marking cycle is an integer multiple of the length of the marking cycle, or the like.

The flow identifier is a basis for each node in the target IOAM domain to uniquely identify the target service flow, generate a detection report instance, and count and report data based on the detection report instance.

The first configuration information further includes inbound interface information for the target service flow to enter the encapsulation node. The inbound interface information may indicate to the encapsulation node that the target service flow enters an inbound interface of the encapsulation node. On this basis, when identifying the target service flow, the encapsulation node does not monitor all interfaces, but only matches and identifies the interface indicated by the inbound interface information, which is beneficial to reducing the workload of the encapsulation node to identify the target service flow.

The IOAM detection scheme provided in some cases may occasionally be used in the network. In this scheme, if a node is not configured and instance configuration information sent by the detection control device is not received, the node may not detect a corresponding service flow. The transmission nodes in the target IOAM domain are not configured, but according to requirements of the scheme, the transmission nodes also may generate detection report instances for the target service flow, allocate IOAM detection resources, and perform IOAM detection for the target service flow in the subsequent process. Therefore, to enable the nodes in the network to determine whether the nodes may automatically perform IOAM detection on the target message without receiving the instance configuration information from the detection control device, that is, whether the nodes may automatically detect the target message, the encapsulation node may give an indication in the IOAM header of the target message. To enable the encapsulation node to determine whether to indicate subsequent nodes, the detection control device may indicate the encapsulation node through the first configuration information. The detection control device carries an automatic detection start indication in the first configuration information. The automatic detection start indication is used for indicating the encapsulation node to carry an automatic detection identifier in the IOAM header of the target message when performing IOAM encapsulation on the target message. The automatic detection identifier is used in the IOAM header of the target message to indicate whether a node through which the target message flows may automatically perform IOAM detection on the target message without receiving the instance configuration information from the detection control device. If the automatic detection start indication is not carried in the first configuration information, the encapsulation node may do not need to carry the automatic detection identifier in the IOAM header of the target message when performing IOAM encapsulation on the target message.

At S204, the encapsulation node identifies, according to the service flow identification feature, the target service flow from service flows entering the node, and performs IOAM encapsulation on a message of the target service flow.

After receiving the first configuration information sent by the detection control device, the encapsulation node may extract a service flow identification feature from the first configuration information, and matches the service flow identification feature with service flow identification features of the service flows entering the node. If the service flow identification feature of a service flow is successfully matched with the service flow identification feature in the first configuration information, it indicates that the service flow may be detected by IOAM as a target service flow, and the encapsulation node can perform IOAM encapsulation on the message of the target service flow.

It may be understood that the encapsulation node encapsulates the message of the target service flow, which actually adds an IOAM header to the message. The IOAM header includes a flow identifier of a service flow to which the service flow belongs, that is, a flow identifier of the target service flow. At the same time, since not all of the messages in the target service flow may be detected, generally, part of the messages in the target service flow are selected as samples, and then the samples are detected and counted, so as to represent overall transmission of the target service flow based on transmission of the samples, which is a bit similar to a biological "mark recapture method". The encapsulation node selects some from the messages in the target service flow, and marks the selected messages as "target messages" with target markers. Then, the target messages carry the target markers and continue to be transmitted. In this way, for other nodes in the IOAM domain, only the target messages may be detected and counted. Therefore, in this embodiment, the encapsulation node carries a target marker in the IOAM header selected as the target message. In this embodiment, the encapsulation node determines the target message according to the marking cycle in the first configuration information. The encapsulation node determines a message of the target service flow arriving at the node within the marking cycle as the target message, and identifies the message with the target marker in the IOAM header.

In addition, as can be known from the foregoing introduction, if the automatic detection start indication is carried in the first configuration information, the IOAM header of the target message may include an automatic detection identifier to indicate whether the node in the IOAM domain may automatically perform IOAM detection on the target message without receiving the instance configuration information from the detection control device. It may be understood that the automatic detection identifier includes a valid automatic detection identifier and an invalid automatic detection identifier. The valid automatic detection identifier is used for indicating a node through which the target message flows to automatically perform IOAM detection on the target message without receiving the instance configuration information from the detection control device. If a node receives a message carrying the invalid automatic detection identifier, the node may no longer perform IOAM detection on the message though the message is determined as a target message. Validity of the automatic detection identifier varies with a change in the target marker.

At S206, the encapsulation node sends the target message to a next node.

After performing IOAM encapsulation on the message of the target service flow, the encapsulation node may send the target message to the next node. It may be understood that the next node of the encapsulation node may be a transmission node or a decapsulation node, because in some cases the encapsulation node and the decapsulation node are adjacent to each other in the transmission path of the target service flow.

The encapsulation node also may perform IOAM detection on the target service flow and report detection data to the detection control device. Therefore, the encapsulation node also may generate a detection report instance for the target service flow, allocate detection resources, and count the detection data. It may be understood that the encapsulation node may detect only the entering of the target service flow from the node. Therefore, in this case, the encapsulation node can generate only an inbound detection report instance. The encapsulation node may detect only the flowing of the target service flow out of the node. Therefore, in this case, the encapsulation node can generate only an outbound detection report instance. Certainly, in some other cases, the encapsulation node may detect the flowing of the target service flow into and out of the node at the same time. Therefore, the encapsulation node may generate an inbound detection report instance and an outbound detection report instance for the target service flow at the same time.

When generating the inbound detection report instance for the target service flow, the encapsulation node may generate the inbound detection report instance directly according to the first configuration information. In this case, the first configuration information includes the flow identifier of the target service flow as well as inbound interface information of the target service flow on the encapsulation node. For example, the encapsulation node extracts a flow identifier "11" and an inbound interface information "port1" in the first configuration information, and generates an inbound detection report instance "flow id=11, port1, inbound". For the outbound detection report instance of the target service flow on the encapsulation node, the encapsulation node is required to monitor an outbound interface of the target service flow on the node, and "learn" and generate a monitoring result and an IOAM header of the target message. For example, after determining an outbound interface port2 of the target message at the node, the encapsulation node generates an inbound detection report instance "flow id=11, port2, outbound" in conjunction with the flow identifier "11" in the IOAM header of the target message. The inbound detection report instance and the outbound detection report instance of the encapsulation node are the detection report instance of the target service flow at the node which are generated based on learning, according to the flow identifier of the IOAM header of the target message and interfaces through which the target service flow flows at the node, that is, an inbound interface and an outbound interface.

In this embodiment, the IOAM header of the target message carries an automatic detection identifier. Therefore, before generating the detection report instance of the target service flow at the node according to the flow identifier in the target message and the interfaces through which the target service flow flows at the node, the encapsulation node may first determine that the IOAM header of the target message further includes a valid automatic detection identifier. The valid automatic detection identifier is used for indicating the node through which the target message flows to automatically perform IOAM detection on the target message without receiving the instance configuration information from the detection control device.

After the encapsulation node generates the detection report instances, corresponding detection resources, such as registers, etc., are naturally allocated to the detection report instances. Besides, the encapsulation node may also report its own detection data to the detection control device, including at least one of the number of target messages counted, a time stamp when the target message arrives at an inbound interface of the node, and a time stamp when the target message arrives at an outbound interface of the node.

The manners in which the encapsulation node reports the detection data to the detection control device are introduced below.

In Manner one, the encapsulation node may send the detection data of the detection report instance to the detection control device according to the marking cycle. For example, the encapsulation node reports the detection data to the detection control device after the marking cycle. A report cycle during which the encapsulation node reports the detection data is equal to the sum of a marking cycle and a non-marking cycle. As shown in FIG. 3, the report cycle 30 of the encapsulation node may be divided into a detection period 31 and an idle period 32. Since the encapsulation node may do not need to detect non-target messages in the non-marking cycle, the detection period 31 has the same length as the marking cycle, and the idle period 32 has the same length as the non-marking cycle. Thus, the report cycle 30 is actually the sum of the marking cycle and the non-marking cycle. Therefore, in one report cycle 30, the encapsulation node may start timing when receiving the first target message in need of IOAM detection, and may start preparing to report the detection data to the detection control device after a timing length reaches the marking cycle.

In Manner two, since the target message is marked according to the marking cycle, the encapsulation node may also determine whether to report the detection data according to whether the message of the target service flow is switched from the target message to a non-target message. If the message of the target service flow is still a target message, it indicates that the current detection period has not ended. After the message of the target service flow is switched from the target message to the non-target message, the encapsulation node can determine that the idle period has been entered currently, and thus can prepare to report the detection data to the detection control device.

In addition to the encapsulation node, the transmission node and the decapsulation node may also perform IOAM detection and report detection data corresponding to the detection report instance to the detection control device. In order to facilitate the detection control device to integrate and analyze the detection data reported by the encapsulation node, the transmission node, and the decapsulation node, the encapsulation node, the transmission node, and the decapsulation node are ensured to report data to the detection control device at basically consistent periodic intervals. It is to be understood that this does not mean that the encapsulation node, the transmission node, and the decapsulation node report data at the same time, but the detection data reported by the encapsulation node, the transmission node, and the decapsulation node in the same batch is specific to the same detection object, that is, the same batch of target messages. Therefore, if the encapsulation node reports the detection data to the detection control device based on the marking cycle, the transmission node and the decapsulation node also report the detection data based on the marking cycle.

In this embodiment, the IOAM header of the target message further includes a marking cycle, so that the transmission node or the decapsulation node may also start timing when receiving the first target message in need of IOAM detection, and may start preparing to report the detection data to the detection control device after a timing length reaches the marking cycle.

Since the encapsulation node may carry the target marker in the IOAM header to indicate the message as a target message when encapsulating the target message, and the IOAM header of the target message may not change in the target IOAM domain, in this case, the encapsulation node and the transmission node may determine, according to the target marker in the IOAM header of the message of the target service flow, how to report the detection data to the detection control device. For example, the encapsulation node and the decapsulation node detect, according to the target marker in the IOAM header, that the message of the target service flow is switched from the target message to a non-target message, and report the detection data to the detection control device.

In Manner three, in this embodiment, the IOAM header includes an automatic detection identifier. Similarly, if an IOAM header of a message carries an automatic detection identifier (valid automatic detection identifier or invalid automatic detection identifier), the automatic detection identifier of the IOAM header of the message may not change in the target IOAM domain. In this case, the encapsulation node may determine, according to the automatic detection identifier, how to report the detection data to the detection control device. For example, the encapsulation node may determine automatic detection stop according to the automatic detection identifier in the IOAM header of the target message and report the detection data corresponding to the detection report instance to the detection control device.

Correspondingly, the transmission node and the decapsulation node may also determine automatic detection stop according to the automatic detection identifier in the IOAM header of the target message and report the detection data.

At S208, a transmission node determines, according to a flow identifier and a target marker in an IOAM header of a message received, that the message is a target message of a target service flow needing to be detected by IOAM.

In a case where one or more transmission nodes exist between the encapsulation node and the decapsulation node, the transmission node or transmission nodes may receive a target service flow transmitted from a previous node. If the transmission node receives a message and finds that the message carries an IOAM header and that the IOAM header carries a target marker, the message may be determined as a target message, and a target service flow to which the target message belongs may be determined according to a flow identifier in the IOAM header.

At S210, the transmission node generates a detection report instance of the target service flow at the node according to the flow identifier in the IOAM header of the target message and an interface through which the target service flow flows at the node.

In some examples, the transmission node may detect only the entering of the target service flow from the node. Therefore, in this case, the transmission node can generate only an inbound detection report instance. The transmission node may detect only the flowing of the target service flow out of the node. Therefore, in this case, the transmission node can generate only an outbound detection report instance. However, the transmission node detects the flowing of the target service flow into and out of the node at the same time. Therefore, the transmission node may generate an inbound detection report instance and an outbound detection report instance for the target service flow at the same time.

The inbound detection report instance and the outbound detection report instance of the transmission node are the inbound detection report instance and the outbound detection report instance of the target service flow at the node which are generated based on learning according to the flow identifier of the IOAM header of the target message and an inbound interface and an outbound interface of the target service flow at the node.

In this embodiment, the IOAM header of the target message carries an automatic detection identifier. Therefore, before generating the detection report instance of the target service flow at the node according to the flow identifier in the target message and the interfaces through which the target service flow flows at the node, the transmission node may first determine that the IOAM header of the target message further includes a valid automatic detection identifier.

After the transmission node generates the detection report instances, corresponding detection resources, such as registers, etc., are naturally allocated to the detection report instances. Besides, the transmission node may also report its own detection data to the detection control device, including at least one of the number of target messages counted, a time stamp when the target message arrives at an inbound interface of the node, and a time stamp when the target message arrives at an outbound interface of the node. Referring to the foregoing introduction for the manners in which the transmission node reports its own detection data to the detection control device, which are not repeated here.

At S212, the transmission node sends the target message to a next node.

After detecting the target message, the transmission node may transmit the target message to the next node. It is to be understood that the next node of the transmission node may be another transmission node or a decapsulation node. If the next node of the transmission node is another transmission node, the another transmission node may continue the process of S208 to S212, until the next node is a decapsulation node.

At S214, a decapsulation node determines, according to a flow identifier and a target marker in an IOAM header of a message received, that the message is a target message of a target service flow needing to be detected by IOAM.

If the decapsulation node receives a message and finds that the message carries an IOAM header and that the IOAM header carries a target marker, the message may be determined as a target message, and a target service flow to which the target message belongs may be determined according to a flow identifier in the IOAM header.

At S216, the decapsulation node generates a detection report instance of the target service flow at the node according to the flow identifier in the IOAM header of the target message and an interface through which the target service flow flows at the node.

In some examples, the decapsulation node may detect only the entering of the target service flow from the node. Therefore, in this case, the decapsulation node can generate only an inbound detection report instance. The decapsulation node may detect only the flowing of the target service flow out of the node. Therefore, in this case, the decapsulation node can generate only an outbound detection report instance. However, the decapsulation node detects the flowing of the target service flow into and out of the node at the same time. Therefore, the decapsulation node may generate an inbound detection report instance and an outbound detection report instance for the target service flow at the same time.

The inbound detection report instance and the outbound detection report instance of the decapsulation node are the inbound detection report instance and the outbound detection report instance of the target service flow at the node which are generated based on learning according to the flow identifier of the IOAM header of the target message and an inbound interface and an outbound interface of the target service flow at the node.

In this embodiment, the IOAM header of the target message carries an automatic detection identifier. Therefore, before generating the detection report instance of the target service flow at the node according to the flow identifier in the target message and the interfaces through which the target service flow flows at the node, the decapsulation node may first determine that the IOAM header of the target message further includes a valid automatic detection identifier.

After the decapsulation node generates the detection report instances, corresponding detection resources, such as registers, etc., are naturally allocated to the detection report instances. Besides, the decapsulation node may also report its own detection data to the detection control device, including at least one of the number of target messages counted, a time stamp when the target message arrives at an inbound interface of the node, and a time stamp when the target message arrives at an outbound interface of the node. Referring to the foregoing introduction for the manners in which the decapsulation node reports its own detection data to the detection control device, which are not repeated here.

At S218, the decapsulation node performs, according to indication of second configuration information, IOAM decapsulation on the message of the target service flow and sends the message after IOAM decapsulation to a next node.

It is to be understood that the decapsulation node may receive second configuration information sent by the detection control device. The second configuration information carries a flow identifier of the target service flow. According to the second configuration information, the decapsulation node may determine that the decapsulation node may perform IOAM decapsulation on the target service flow. Thus, before sending messages of the target service flow to the next node, the decapsulation node may first strip IOAM headers of the messages of the target service flow, including IOAM headers of the target messages as well as IOAM headers of non-target messages. The decapsulation node performs IOAM decapsulation on the message of the target service flow and sends the message after IOAM decapsulation to the next node. So far, the message of the target service flow flows out of the target IOAM domain.

In some examples, the second configuration information sent by the detection control device to the decapsulation node further includes exit check information. The exit check information may indicate to the decapsulation node an outbound interface of the target service flow on the decapsulation node expected by the detection control device, that is, an expected outbound interface. Therefore, after sending the message of the target service flow to the next node, the decapsulation node may determine an actual outbound interface of the target service flow, then match the actual outbound interface with the expected outbound interface, and feed a matching result back to the detection control device, so that the detection control device can determine whether its expectation is correct according to the matching result.

As can be known from the foregoing introduction, the encapsulation node, the decapsulation node, and the transmission node may generate detection report instances of the target service flow at the nodes. The detection report instances are allocated with detection resources respectively. However, if the transmission path of the target service flow changes or automatic IOAM detection for the target service flow ends, or the detection control device re-indicates a marking cycle, the detection corresponding to the detection report instances is ended. In other words, the detection report instances become useless detection report instances. In this case, it is unreasonable for the detection report instances to continue to exist and occupy detection resources of the nodes. Therefore, in some examples, the nodes may perform aging detection on the detection report instances on the nodes, determine aging detection report instances, and then delete the aging detection report instances, so as to release detection resources. Several manners for the nodes to determine the aging detection report instances are provided below. Since a communication device in the network may be used as an encapsulation node, a transmission node or a decapsulation node, aging management of the detection control device on detection report instances thereon is illustrated here.

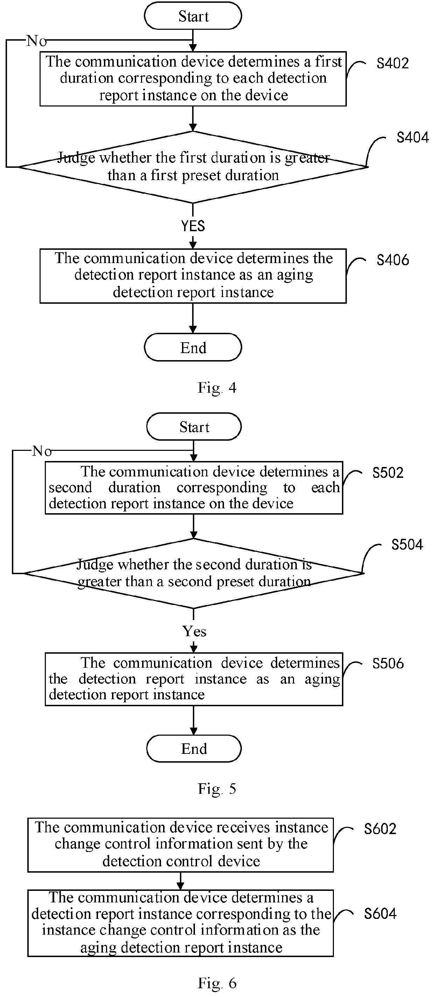

Referring to FIG. 4 for Manner one.

At S402, the communication device determines a first duration corresponding to each detection report instance on the device.

The so-called first duration here is actually a duration between the time at which a message of a target service flow corresponding to the detection report instance last appeared on the communication device and the current time, that is, a time difference between the current time and the time at which the message of the target service flow was last received.

At S404, the communication device judges whether the first duration is greater than a first preset duration.

The first preset duration may be preset on the communication device by an administrator. The first preset duration may be configured by the detection control device and delivered to the encapsulation node, and is carried by the encapsulation node in the IOAM header of the message of the target service flow to other nodes. In this case, the detection control device may set different first preset durations according to different target service flows.

At S406, the communication device determines the detection report instance as an aging detection report instance.

If the communication device determines that the first duration is greater than the first preset duration, it may be determined that the detection report instance is aged. Otherwise, the communication device continues step S402.

Referring to FIG. 5 for Manner two.

At S502, the communication device determines a second duration corresponding to each detection report instance on the device.

The so-called second duration here is actually a duration for the communication device to continuously receive an invalid target message of the target service flow corresponding to the detection report instance. For example, if the encapsulation node determines that the transmission node may do not need to automatically detect a message of a target service flow, an invalid automatic detection identifier may be carried in an IOAM header of the message of the target service flow. For any node in the target IOAM domain, if invalid target messages have been received for a long time, the node can determine that IOAM detection on the message of the corresponding target service flow may no longer needed.

At S504, the communication device judges whether the second duration is greater than a second preset duration.

The second preset duration may be preset on the communication device by an administrator. The second preset duration may be configured by the detection control device and delivered to the encapsulation node, and is carried by the encapsulation node in the IOAM header of the message of the target service flow to other nodes. In this case, the detection control device may set different second preset durations according to different target service flows.

At S506, the communication device determines the detection report instance as an aging detection report instance.

If the communication device determines that the second duration is greater than the second preset duration, it may be determined that the detection report instance has aged. Otherwise, the communication device continues step S502.

Referring to FIG. 6 for Manner three.

At S602, the communication device receives instance change control information sent by the detection control device.

The instance change control information may be indication information indicated by the detection control device to delete a detection report instance of a target service flow or instance change control information issued due to a change in the marking cycle of the target service flow.

At S604, the communication device determines a detection report instance corresponding to the instance change control information as an aging detection report instance.

After receiving the instance change control information, the communication device can delete the detection report instance corresponding to the instance change control information on the device. It may be understood that the instance change control information generally carries a flow identifier of the corresponding target service flow. Therefore, the communication device cam determine, according to the flow identifier in the instance change control information, which detection report instances on the device correspond to the instance change control information, that is, which detection report instances are aging detection report instances.

Based on the IOAM detection processing scheme according to embodiments of the present application, the encapsulation node, the transmission node, and the decapsulation node generate detection report instances corresponding to a target service flow based on learning without receiving instance configuration information from the detection control device, and perform IOAM detection on a target message in the target service flow. The detection control device may do not need to determine a specific transmission path of the target service flow in each node and an inbound interface and an outbound interface on each node, which reduces the requirement of IOAM detection start for accuracy of calculation of the detection control device. At the same time, the detection control device may do not need to configure transmission nodes, thereby reducing configuration load of the detection control device.

In some examples, the decapsulation node may match the expected outbound interface of the target service flow with the actual outbound interface, and send a matching result to the detection control device, so that the detection control device can detect a network node that the target service flow actually passes through and verify whether an actual transmission path of the target service flow is as expected.

Besides, the encapsulation node, the transmission node, and the decapsulation node can automatically perform aging management on the detection report instances generated, and delete the aging detection report instances in a timely manner to release detection resources, thereby avoiding a waste of resources and promoting optimized allocation of the resources.

To enable those having ordinary skill in the art to be clearer about the advantages and details of the IOAM detection processing scheme, this embodiment continues to illustrate the scheme with examples.

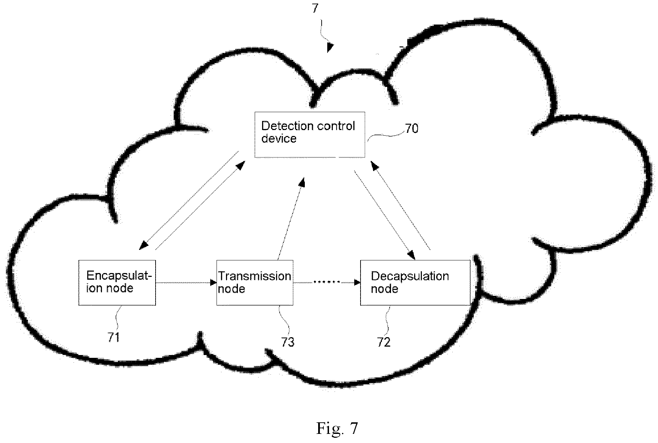

Referring to FIG. 7, FIG. 7 is a schematic diagram of an IOAM detection processing scheme implemented by an IOAM detection processing system according to this embodiment.

An IOAM detection processing system 7 includes a detection control device 70, an encapsulation node 71, a decapsulation node 72, and at least one transmission node 73. The transmission nodes 73 form a link connected in series between the encapsulation node 71 and the decapsulation node 72. Certainly, it may be understood by those having ordinary skill in the art that other links may also exist between the encapsulation node 71 and the decapsulation node 72.

In this embodiment, the detection control device 70 only delivers configuration information to the encapsulation node 71 and the decapsulation node 72, while information interaction between each transmission node 73 and the detection control device 70 is unidirectional. The transmission node 73 may do not need to be configured by the detection control device 70, but only may report detection data to the detection control device 70. Compared with FIG. 1, the interaction between the centralized controller 14 and the encapsulation node 11, the decapsulation node 12, the transmission node 13 in FIG. 1 is bidirectional. Therefore, in the IOAM detection scheme shown in FIG. 1, the centralized controller 14 may know transmission nodes and may determine how the target service flow flows through the transmission nodes. However, the detection control device 70 neither may understand which interfaces of the transmission node 73 that the target service flow flows through nor may know the transmission nodes.

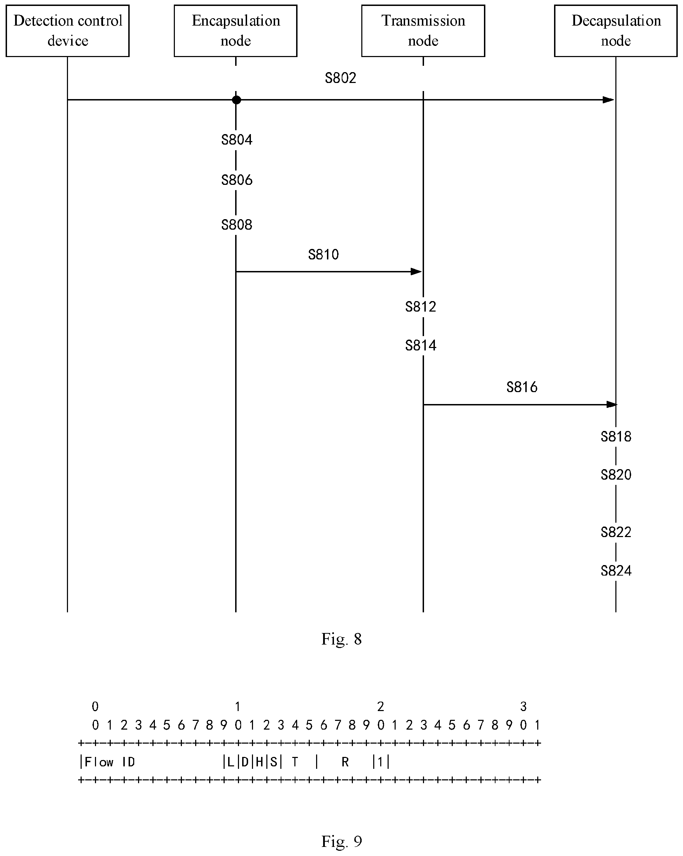

Details of an IOAM detection processing method implemented by the IOAM detection processing system 7 are illustrated below with reference to the flowchart of the IOAM detection control scheme shown in FIG. 8.

At S802, a detection control device sends first configuration information to an encapsulation node in a target IOAM domain, and sends second configuration information to a decapsulation node.

In this embodiment, the first configuration information includes a flow identifier of a target service flow, a service flow identification feature, and a marking cycle; in addition, further includes inbound interface information and an automatic detection start indication.

At S804, the encapsulation node identifies, according to the inbound interface information and the service flow identification feature, the target service flow from service flows entering the node.

After receiving the first configuration information, the encapsulation node identifies service flows entering the node from an inbound interface indicated by the inbound interface information, determines whether a service flow identification feature of a service flow matches the service flow identification feature in the first configuration information, and if the matching is successful, takes the matched service flow as the target service flow.

The service flow identification feature may be at least one of an IP message 5-tuple, layer-2 Ethernet header information, a Virtual Local Area Network (VLAN), or a non-IP message protocol type.

At S806, the encapsulation node generates an inbound detection report instance corresponding to the target service flow.

In this embodiment, the encapsulation node generates the inbound detection report instance according to the first configuration information, because the Flow id of the target service flow and the inbound interface information have been carried in the first configuration information. It may be understood that the encapsulation node may generate the inbound detection report instance according to the first configuration information immediately after the first configuration information is received, for example, before the target service flow arrives at the node.

At S808, the encapsulation node performs IOAM encapsulation on the messages of the target service flow.

The encapsulation node performs IOAM encapsulation on the message of the target service flow, which actually adds an IOAM header to the message.

FIG. 9 is a schematic diagram of a format of an IOAM data header, where "L" denotes a position of the target marker, and if "L" in an IOAM header of a message is set to "1", the message is a target message. In some cases, positions "H" and "T" of the IOAM header are reserved fields. In this embodiment, the encapsulation node sets an automatic detection identifier in the reserved fields, that is, "H". If "H" in an IOAM header of a target message is set to "1", the target message carries a valid automatic detection identifier. A node receiving the target message also may perform IOAM detection on the target message even if not receiving instance configuration information from the detection control device. On the contrary, if "H" in an IOAM header of a message is set to "0", the message carries an invalid automatic detection identifier. "T" carries a marking cycle. In FIG. 9, T occupies 3 bytes. In binary, one of the 3 bytes can indicate 8 different marking cycles.

At S810, the encapsulation node sends the message of the target service flow to a next node, and automatically generates an outbound detection report instance of the target service flow at the node.

In this embodiment, after encapsulating the message of the target service flow, the encapsulation node sends the message of the target service flow to the next node. After determining how to send the message of the target service flow, the encapsulation node may obtain an outbound interface of the target service flow on the node. Therefore, the encapsulation node may generate the outbound detection report instance of the target service flow at the node according to the flow identifier in the IOAM header of the target message and an outbound interface of the target service flow at the node.

At S812, a transmission node determines, according to a flow identifier and a target marker in an IOAM header of a message received, that the message is a target message of a target service flow needing to be detected by IOAM.

If the transmission node receives a message and finds that the message carries an IOAM header and that the IOAM header carries a target marker, the message may be determined as a target message, and a target service flow to which the target message belongs may be determined according to a flow identifier in the IOAM header.

At S814, the transmission node generates an inbound detection report instance of the target service flow at the node according to the flow identifier in the IOAM header of the target message and an inbound interface of the target service flow at the node.

The transmission node may determine the inbound interface for the target message to enter the node, and at the same time, may generate the inbound detection report instance of the target service flow at the node according to the flow identifier in the IOAM header of the target message without receiving the instance configuration information from the detection control device.

At S816, the transmission node sends the message of the target service flow to a next node, and automatically generates an outbound detection report instance of the target service flow at the node.

In this embodiment, it is assumed that the next node of the transmission node is a decapsulation node. However, it may be understood by those having ordinary skill in the art that, in more scenarios, multiple transmission nodes exist between the encapsulation node and the decapsulation node. Therefore, a next node of a transmission node may also be another transmission node.

The transmission node may determine the outbound interface for the target message to flow out of the node, and at the same time, may generate the outbound detection report instance of the target service flow at the node according to the flow identifier in the IOAM header of the target message without receiving the instance configuration information from the detection control device.

At S818, a decapsulation node determines, according to a flow identifier and a target marker in an IOAM header of a message received, that the message is a target message of a target service flow needing to be detected by IOAM.

If the decapsulation node receives a message and finds that the message carries an IOAM header and that the IOAM header carries a target marker, the message may be determined as a target message, and a target service flow to which the target message belongs may be determined according to a flow identifier in the IOAM header.

At S820, the decapsulation node generates an inbound detection report instance of the target service flow at the node according to the flow identifier in the IOAM header of the target message and an inbound interface of the target service flow at the node.

The decapsulation node may determine the inbound interface for the target message to enter the node, and at the same time, may generate the inbound detection report instance of the target service flow at the node according to the flow identifier in the IOAM header of the target message without receiving the instance configuration information from the detection control device.

At S822, the decapsulation node performs IOAM decapsulation on the messages of the target service flow.

The decapsulation node may receive second configuration information sent by the detection control device in S802. The second configuration information carries a flow identifier of the target service flow. According to the second configuration information, the decapsulation node may determine that the decapsulation node may perform IOAM decapsulation on the target service flow. Thus, before sending messages of the target service flow to the next node, the decapsulation node may first strip IOAM headers of the messages of the target service flow.

At S824, the decapsulation node sends the message of the target service flow to a next node, and automatically generates an outbound detection report instance of the target service flow at the node.

After the decapsulation node sends the message of the target service flow to the next node, the decapsulation node may determine the outbound interface for the target message to flow out of the node, and at the same time, may generate the outbound detection report instance of the target service flow at the node according to the flow identifier in the IOAM header of the target message without receiving the instance configuration information from the detection control device.

The second configuration information sent by the detection control information to the decapsulation node further includes exit check information. Therefore, after sending the message of the target service flow to the next node, the decapsulation node may determine an actual outbound interface of the target service flow, then match the actual outbound interface with the expected outbound interface, and feed a matching result back to the detection control device, so that the detection control device can determine whether its expectation is correct according to the matching result.

In addition, the encapsulation node, the transmission node, and the decapsulation node may also report detection data of the detection report instances on the nodes to the detection control device, and perform aging management on the detection report instances. Referring to the introduction in Embodiment one for details of the specific detection data reporting manner and the aging management on the detection report instances, which are not repeated here.

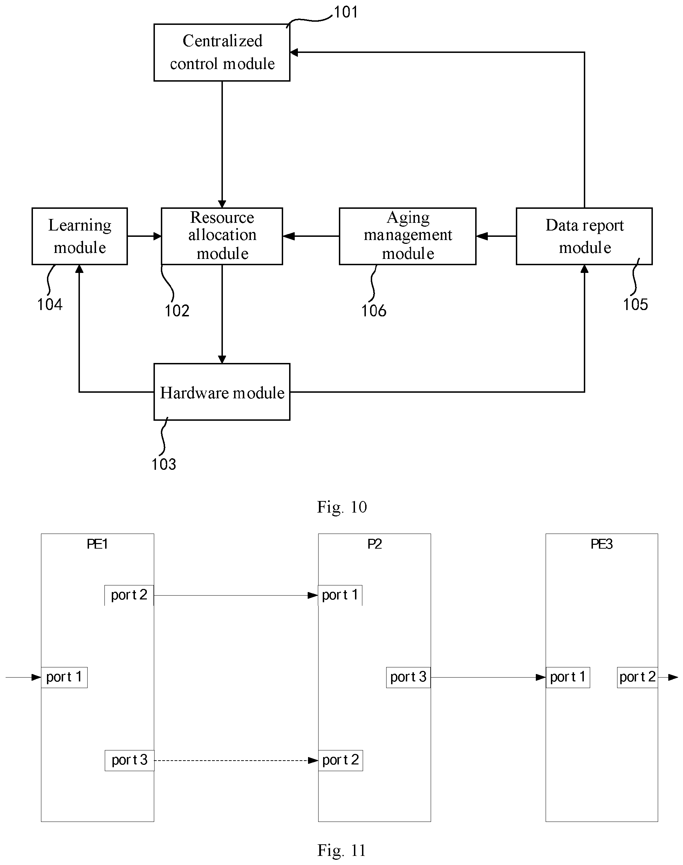

Referring to FIG. 10, the IOAM detection processing system according to this embodiment may be divided into the following modules in terms of functions: a centralized control module 101, a resource allocation module 102, a hardware module 103, a learning module 104, a data report module 105, and an aging management module 106.

The centralized control module 101 is located in the detection control device, for example, a centralized controller, and is responsible for configuring an encapsulation node and a decapsulation node and receiving IOAM detection data reports.

The resource allocation module 102 is located on a service node, and is responsible for generating IOAM detection report instances and allocating hardware resources corresponding to the detection report instances, including marking resources, message monitoring resources, and subscription data report resources.

The hardware module 103 is located on the service node, and is responsible for marking of messages, traffic ON monitoring and statistics and measurement of network quality data.

The learning module 104 is located on the service node, and is responsible for collecting traffic monitoring results in the hardware module 103, analyzing requirements of new detection report instances according to the traffic monitoring results, and sending the requirements to the resource allocation module 102, so that the resource allocation module 102 generate corresponding detection report instances.

The data report module 105 is located in the service node, and is responsible for collecting network quality data information in the hardware module 103, and generating detection data corresponding to the detection report instances and sending the detection data to the centralized control module 101. In addition, aging detection report instances are further analyzed according to reported data content and sent to the aging management module 106.

The aging management module 106 is located in the service node, and is responsible for receiving aging detection report instance information sent by the data report module 105, and sending a resource release request to the resource allocation module 102.

The IOAM detection processing system according to this embodiment can greatly reduce routing calculation burden of the detection control device, such as the centralized controller, and simplify configuration complexity. At the same time, hardware resources may be needed for network quality measurement are saved, and the utilization of the resources is maximized. Besides, the IOAM detection processing system can also achieve an effect of detecting a network node that the target service flow actually passes through and verifying whether a transmission path of service data is as expected, which provides a fast, accurate and effective detection method for an actual traffic forwarding path for engineering operation and maintenance.

In a core network composed of Packet Transport Network (PTN) devices, the PTN devices are added to a target IOAM domain. In the network, a layer-3 virtual private network (L3VPN) service is deployed through PE1, P2, and PE3 devices, as shown in FIG. 11. It is assumed that a service flow (source IP address =192.168.10.50, destination IP address =192.155.20.60) in the L3VPN enters the target IOAM domain from Interface 1 of PE1, is forwarded by an intermediate device PE2, and finally leaves the target IOAM domain through Interface 2 of PE3. At the same time, it is assumed that a layer of link-level protection is configured between the two nodes PE1 and P2. "Interface 2 of PE1 ->Interface 1 of P2" is an operating link, and "Interface 3 of PE1 -> Interface 2 of P2" is a protection link. An initial target service flow is forwarded on the operating link. In order to detect the network forwarding quality of the service flow, the centralized controller enables an IOAM automatic detection function.

In step 1, the centralized controller delivers a service identification feature ("source ip=192.168.10.50, destination ip=192.155.20.60"), a flow identifier (flow id=X), inbound interface information (port1), and a marking cycle (T1) of a target service flow to the encapsulation node PE1 device, and delivers the flow identifier (flow id=X), the marking cycle (T1), and exit check information (port2) to the decapsulation node PE3 device.

In step 2, the PE1 device
matches and identifies an ip service message entering from Interface 1. Once the matching is successful, marking cycles and non-marking cycles are alternated according to a basic IOAM method, and are forwarded according to an L3VPN service forwarding rule. The service message forwarded from Interface 2 carries the IOAM data header shown in FIG. 9 at a stack bottom of an MPLS label.

The PE3 device receives a decapsulation indication and exit check information for the service flow with flow id=X, and automatically generates an IOAM decapsulation check instance "flow id=X, marking cycle=T1, outbound interface=port2" into a hardware checker.

In step 3, after receiving configuration information of the centralized controller, the PE1 device automatically generates a detection report instance "flowid=X, port1, inbound". When the hardware module detecting that a service message carrying a valid IOAM data header with H and T fields is forwarded through Interface 2, the PE1 device automatically learns and generates a detection report instance "flowid=X, port2, outbound".

In step 4, the P2 device, when receiving a message with a flow identifier X at Interface 1, automatically learns and generates a detection report instance "flowid=X, port1, inbound". When the message is forwarded through Interface 3, a detection report instance "flowid=X, port3. outbound" is automatically learned and generated.

In step 5, the P3 device, when receiving a message with a flow identifier X forwarded from a network element, automatically learns and generates a detection report instance "flowid=X, port1, inbound". When the message is forwarded through Interface 2, a detection report instance "flowid=X, port2, outbound" is automatically learned and generated.

In step 6, three network element devices PE1, P2, and PE3 detect and report inbound/outbound detection report instances to the centralized controller according to frequencies corresponding to the marking cycle T respectively, and the centralized controller calculates and analyzes packet loss rates and latencies within the nodes and each link between the nodes, and presents the packet loss rates and latencies to the network maintenance personnel.

In step 7, when the operating link between PE1 and P2 fails, the service is switched to the protection link, and Interface 3 on PE1 and Interface 2 on P2 may automatically learn and generate corresponding detection report instances and detect the detection report instances.

In step 8, since the service flow is switched to the protection link, detection data of the IOAM report instance "flowid=X, port2, outbound" of PE1 is 0 in a next marking cycle after the service flow is switched, is considered as invalid data, and is not reported to the centralized controller. When the number of consecutive cycles of invalid data reaches a preset aging cycle value, the detection report instance "flowid=X, port2, outbound" starts to be aged, and hardware resources corresponding to the instance are released. Similarly, the IOAM report instance "flowid=X, port1, inbound" of P2 also enters the same aging process.

In step 9, when the network maintenance personnel desires to cancel the automatic detection for the service flow X, the centralized controller sends instance change control information with the flow identifier to PE1 and PE3. PE1 immediately quickly ages the detection report instance "flowid=X, port1, inbound", and PE3 immediately quickly deletes IOAM decapsulation check resources of the hardware checker for the instance. Other report instances related to the detection instance X may also be quickly aged if the messages include no IOAM data header.

Based on the IOAM detection processing scheme according to this embodiment, the problems such as IOAM detection cannot be performed when the centralized controller has heave calculation load, forwarding plane resources are seriously wasted, and an actual underlying forwarding path is not as expected in some cases are overcome, an effect of automatically detecting the network forwarding quality in an IOAM domain is achieved, correctness check of network outbound interfaces is added, and the rational utilization of the forwarding plane resources and the stability of the whole system are improved.

This embodiment provides a storage medium. The storage medium may store one or more computer programs that can be read, compiled, and executed by one or more processors. In this embodiment, the storage medium may store at least one of an IOAM detection configuration program, a first IOAM detection processing program, a second IOAM detection processing program, or a third IOAM detection processing program. The IOAM detection configuration program is executable by one or more processors, so as to implement steps of the IOAM detection configuration method at the side of the detection control device in any of the foregoing embodiments. The first IOAM detection processing program is executable by one or more processors, so as to implement steps of the IOAM detection processing method at the side of the encapsulation node in any of the foregoing embodiments. The second IOAM detection processing program is executable by one or more processors, so as to implement steps of the IOAM detection processing method at the side of the transmission node in any of the foregoing embodiments. The third IOAM detection processing program is executable by one or more processors, so as to implement steps of the IOAM detection processing method at the side of the decapsulation node in any of the foregoing embodiments.

A computer program product, which includes a computer-readable apparatus. The computer-readable apparatus stores the computer programs as shown above. The computer-readable apparatus may include the computer-readable storage medium as shown above.

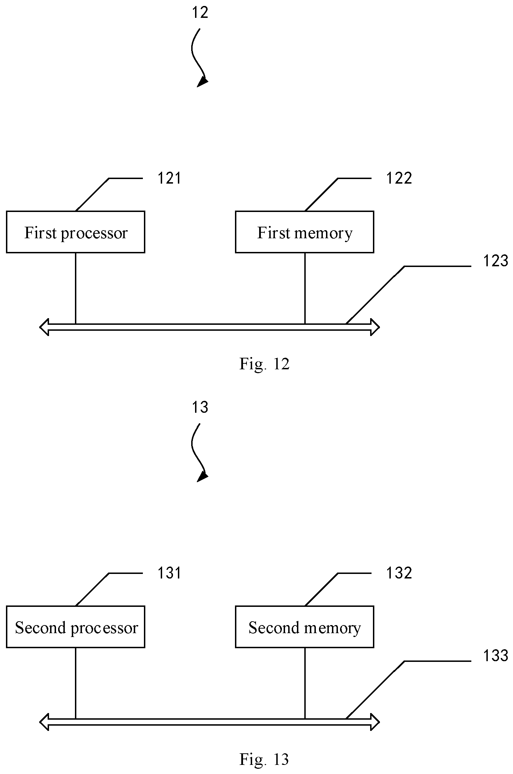

This embodiment further provides a detection control device. As shown in FIG. 12, the detection control device 12 includes a first processor 121, a first memory 122, and a first communication bus 123. The first communication bus 123 is configured to realize connection communication between the first processor 121 and the first memory 122. The first memory 122 may be the storage medium storing the IOAM detection configuration program. The first processor 121 may be configured to execute the IOAM detection configuration program stored in the first memory 122, so as to implement steps of the IOAM detection configuration method at the side of the detection control device in any of the foregoing embodiments.

The first processor 121 sends configuration information to a to-be-configured node in a target IOAM domain. The target IOAM domain is an IOAM domain to perform IOAM detection on a target service flow. The to-be-configured node is composed of an encapsulation node and a decapsulation node in the target IOAM domain. The configuration information sent to the encapsulation node is first configuration information, including a flow identifier of the target service flow, a service flow identification feature, and a marking cycle. The service flow identification feature is used by the encapsulation node to identify the target service flow from service flows entering the node. The marking cycle is used for indicating the encapsulation node to mark a message arriving within the marking cycle in the target service flow as a target message. The configuration information sent to the decapsulation node is second configuration information, including the flow identifier of the target service flow.

The first configuration information further includes inbound interface information for the target service flow to enter the encapsulation node.

In this embodiment, the first configuration information further includes an automatic detection start indication. The automatic detection start indication is used for indicating the encapsulation node to carry an automatic detection identifier in an IOAM header of the target message when performing IOAM encapsulation on the target message. The automatic detection identifier is used for indicating whether a node through which the target message flows may automatically perform IOAM detection on the target message without receiving instance configuration information from the detection control device.

This embodiment further provides a communication device. Referring to FIG. 13, the communication device 13 includes a second processor 131, a second memory 132, and a second communication bus 133 configured to connect the second processor 131 and the second memory 132.

The communication device 13 may be an encapsulation node. In this case, the second memory 132 is the storage medium storing the first IOAM detection processing program. The second processor 131 is configured to execute the first IOAM detection processing program stored in the second memory 132, so as to implement steps of the IOAM detection processing method at the side of the encapsulation node in any of the foregoing embodiments.

The second processor 131 receives first configuration information sent by a detection control device. The first configuration information includes a flow identifier of a target service flow, a service flow identification feature, and a marking cycle. Then, the second processor 131 identifies, according to the service flow identification feature, the target service flow from service flows entering the communication device 13, and performs IOAM encapsulation on a message of the target service flow. An IOAM header added after encapsulation carries the flow identifier of the target service flow, and an IOAM header of a message arriving within the marking cycle in the target service flow further carries a target marker indicating that the message is a target message. The IOAM header allows a node through which the target message flows to automatically generate a detection report instance without receiving instance configuration information sent by the detection control device. Then, the second processor 131 sends the target message to a next node.

In this embodiment, the IOAM header further includes an automatic detection identifier. The automatic detection identifier is used for indicating whether the node through which the target message flows may automatically perform IOAM detection on the target message without receiving the instance configuration information from the detection control device.

In some examples, the IOAM header further includes a marking cycle. The marking cycle is used for indicating the time for each node in the target domain to report data to the detection control device.

The first configuration information further includes inbound interface information for the target service flow to enter the encapsulation node.

When identifying, according to the service flow identification feature, the target service flow from the service flows entering the communication device 13, the second processor 131 may monitor the service flows entering the communication device 13 from an inbound interface corresponding to the inbound interface information, and identify the target service flow corresponding to the service flow identification feature.

The second processor 131 may further generate an outbound detection report instance of the target service flow at the communication device 13 according to the flow identifier in the target message and an outbound interface of the target service flow at the communication device 13.

In some examples, before generating the outbound detection report instance of the target service flow at the communication device 13 according to the flow identifier in the target message and the outbound interface of the target service flow at the communication device 13, the second processor 131 may first determine that the IOAM header of the target message further includes a valid automatic detection identifier. The valid automatic detection identifier is used for indicating the node through which the target message flows to automatically perform IOAM detection on the target message without receiving the instance configuration information from the detection control device.

The communication device 13 may be a transmission node. In this case, the second memory 132 is the storage medium storing the second IOAM detection processing program. The second processor 131 is configured to execute the second IOAM detection processing program stored in the second memory 132, so as to implement steps of the IOAM detection processing method at the side of the transmission node in any of the foregoing embodiments.

The second processor 131 determines, according to a flow identifier and a target marker in an IOAM header of a message received, that the message is a target message of a target service flow needing to be detected by IOAM. Then, the second processor 131 generates a detection report instance of the target service flow at the communication device 13 according to the flow identifier in the IOAM header of the target message and an interface through which the target service flow flows at the communication device 13. The detection report instance includes at least one of an inbound detection report instance or an outbound detection report instance. Then, the second processor 131 sends the target message to a next node.

In some examples of this embodiment, before generating the detection report instance of the target service flow at the communication device 13 according to the flow identifier in the IOAM header of the target message and the interface through which the target service flow flows at the communication device 13, the second processor 131 may first determine that the IOAM header of the target message further includes a valid automatic detection identifier. The valid automatic detection identifier is used for indicating the node through which the target message flows to automatically perform IOAM detection on the target message without receiving the instance configuration information from the detection control device.

The communication device 13 may be the second processor 131. In this case, the second memory 132 is the storage medium storing the third IOAM detection processing program. The second processor 131 is configured to execute the third IOAM detection processing program stored in the second memory 132, so as to implement steps of the IOAM detection processing method at the side of the second processor 131 in any of the foregoing embodiments.

The second processor 131 determines, according to a flow identifier and a target marker in an IOAM header of a message received, that the message is a target message of a target service flow needing to be detected by IOAM, and then generates a detection report instance of the target service flow at the communication device 13 according to the flow identifier in the IOAM header of the target message and an interface through which the target service flow flows at the communication device 13. The detection report instance includes at least one of an inbound detection report instance or an outbound detection report instance. Then, the second processor 131 performs, according to indication of second configuration information, IOAM decapsulation on the message of the target service flow and sends the message after IOAM decapsulation to a next node. The second configuration information is sent by a detection control device, including a flow identifier of the target service flow.

In some examples of this embodiment, before generating the detection report instance of the target service flow at the communication device 13 according to the flow identifier in the IOAM header of the target message and the interface through which the target service flow flows at the communication device 13, the second processor 131 may first determine that the IOAM header of the target message further includes a valid automatic detection identifier. The valid automatic detection identifier is used for indicating the node through which the target message flows to automatically perform IOAM detection on the target message without receiving the instance configuration information from the detection control device.

In some examples, the second configuration information further includes exit check information. The exit check information is used for indicating to the second processor 131 an outbound interface of the target service flow on the second processor 131 expected by the detection control device.

The second processor 131, after performing IOAM decapsulation on the target message and sends the target message to the next node, may further match an actual outbound interface of the target message on the second processor 131 with the expected outbound interface indicated by the exit check information, and report a matching result to the detection control device.

In some examples, whether the communication device 13 is an encapsulation node, a decapsulation node, or a transmission node, the second processor 131 can perform the following processes.

The second processor 131 determines an aging detection report instance in the communication device 13, and deletes the aging detection report instance.

The second processor 131 determines the aging detection report instance in the communication device in at least one of the following manners.

### Manner one:

For each detection report instance on the communication device 13, the second processor 131 determines a first duration between the time at which a message of a target service flow corresponding to the detection report instance last appeared on the communication device 13 and the current time. The second processor 131 determines the detection report instance as the aging detection report instance if the first duration is greater than a first preset duration.

### Manner two:

For each detection report instance on the communication device 13, the second processor 131 determines a second duration during which an invalid target message is continuously received. The invalid target message is a target message carrying an invalid automatic detection identifier. The invalid automatic detection identifier is used for indicating that a node through which the target message flows may do not need to automatically perform IOAM detection on the target message without receiving instance configuration information from the detection control device. The second processor 131 determines the detection report instance as the aging detection report instance if the second duration is greater than a second preset duration.

### Manner three:

The second processor 131 receives instance change control information sent by the detection control device, and then determines a detection report instance corresponding to the instance change control information as the aging detection report instance.

The second processor 131 is further configured to report detection data corresponding to the detection report instance to the detection control device according to information in the IOAM header in any one of the following manners.

In Manner one, the second processor 131 detects, according to the target marker in the IOAM header, that the message of the target service flow is switched from the target message to a non-target message, and reports the detection data corresponding to the detection report instance to the detection control device.

In Manner two, the IOAM header further includes an automatic detection identifier for indicating whether a node through which the target message flows may automatically perform IOAM detection on the target message without receiving instance configuration information from the detection control device. The second processor 131 determines automatic detection stop according to the automatic detection identifier in the IOAM header and reports the detection data corresponding to the detection report instance to the detection control device.

In Manner three, the IOAM header further includes a marking cycle, and the second processor 131 reports the detection data corresponding to the detection report instance to the detection control device according to the marking cycle in the IOAM header.

An IOAM detection processing system, which includes an encapsulation node, a decapsulation node, a transmission node, and a detection control device. The encapsulation node is communicatively connected with the transmission node and the decapsulation node sequentially. The detection control device is the detection control device in FIG. 12. The encapsulation node is the communication device 13 in which the second processor 131 executes the first IOAM detection processing program, the transmission node is the communication device 13 in which the second processor 131 executes the second IOAM detection processing program, and the decapsulation node is the communication device 13 in which the second processor 131 executes the third IOAM detection processing program.

Referring to the introduction in the foregoing embodiments for details to the IOAM detection processing scheme implemented by the encapsulation node, the decapsulation node, the transmission node, and the detection control device, which are not repeated here.

The detection control device only configures the encapsulation node and the decapsulation node in the target IOAM domain corresponding to the target service flow. The detection control device may do not need to configure transmission nodes in the target IOAM domain, and even may do not need to concern about which nodes are transmission nodes of the target service flow. Therefore, the detection control device neither may accurately calculate the transmission nodes of the target service flow, nor may consider nodes on an operating path and a protection path of the target service flow, which reduces the requirements on the computing capacity of the detection control devices and reduces the configuration burden of the detection control device. Besides, the transmission nodes in the target IOAM domain generate detection report instances according to the IOAM header in the target message, that is, allocate detection resources, only after the target service flow arrives at the nodes. If the target service flow does not flow through the nodes, the nodes may not generate detection report instances for the target service flow and allocate detection resources. Therefore, the detection resources are not wasted, being conducive to optimized allocation of network resources.

Based on the detection configuration and processing methods and systems, the control and communication devices, and the storage medium according to embodiments of the present application, when a target service flow may be detected, the detection control device only sends first configuration information to an encapsulation node in a target IOAM domain, and sends second configuration information to a decapsulation node, without sending configuration information to transmission nodes in the target IOAM domain. After identifying the target service flow according to the first configuration information, the encapsulation node performs IOAM encapsulation on a message of the target service flow, and marks a message arriving at the encapsulation node within the marking cycle in the IOAM header, which is used as a target message. Then, the encapsulation node may send the target message to a next node. The transmission nodes in the target IOAM domain have not received the configuration of the detection control device, and cannot generate detection report instances according to the instance configuration information sent by the detection control device. However, the transmission nodes automatically generates detection report instances of the target service flow at the nodes according to information in the IOAM header of the target message received, so as to realize IOAM detection. After the target message is transmitted to the decapsulation node of the target IOAM domain, the decapsulation node can also automatically generate a detection report instance of the target service flow at the node according to the information in the IOAM header of the target message received. At the same time, the decapsulation node can further perform IOAM decapsulation on the message of the target service flow according to the flow identifier carried in the second configuration information by the detection control device, so that the message of the target service flow flows out of the IOAM domain. Thus, the detection control device only configures the encapsulation node and the decapsulation node in the target IOAM domain corresponding to the target service flow. The detection control device may do not need to configure transmission nodes in the target IOAM domain, and even may do not need to concern about which nodes are transmission nodes of the target service flow. Therefore, the detection control device neither may accurately calculate the transmission nodes of the target service flow, nor may consider nodes on an operating path and a protection path of the target service flow, which reduces the requirements on the computing capacity of the detection control devices and reduces the configuration burden of the detection control device. Besides, the transmission nodes in the target IOAM domain generate detection report instances according to the IOAM header in the target message only after the target service flow arrives at the nodes, that is, allocate detection resources only after the target service flow arrives at the nodes. If the target service flow does not flow through the nodes, the nodes may not generate detection report instances for the target service flow and allocate detection resources. Therefore, the detection resources are not wasted, being conducive to optimized allocation of network resources.

Therefore, it is to be understood by those having ordinary skill in the art that some or all steps of the method and function modules/units in the system or apparatus may be implemented as software (which may be implemented by computer program codes executable by a computing device), firmware, hardware and suitable combinations thereof. In the hardware implementation, the division of the function modules/units mentioned in the above description may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits.

Additionally, as is known to those having ordinary skill in the art, communication media generally include computer-readable instructions, data structures, computer program modules, or other data in carriers or in modulated data signals transported in other transport mechanisms and may include any information delivery medium. Therefore, the present application is not limited to any particular combination of hardware and software.

## Claims

1. An in-band Operation Administration and Maintenance, IOAM, detection configuration method, applied to a detection control device (14), comprising:
sending, by the detection control device, configuration information to to-be-configured nodes composed of an encapsulation node (11) and a decapsulation node (13) in a target IOAM domain (10), respectively, which comprises sending first configuration information to the encapsulation node in the target IOAM domain and sending second configuration information to the decapsulation node in the target IOAM domain, the target IOAM domain being an IOAM domain performing IOAM detection on a target service flow; the first configuration information comprising a flow identifier of the target service flow, a service flow identification feature, and a marking cycle, the service flow identification feature being used by the encapsulation node to identify the target service flow from service flows entering the node, the marking cycle being used for indicating the encapsulation node to mark a message arriving within the marking cycle in the target service flow as a target message; and the second configuration information comprising the flow identifier of the target service flow, the flow identifier of the target service flow is for each node in the target IOAM domain to uniquely identify the target service flow;
**characterized in that**, the first configuration information further comprises inbound interface information and an automatic detection start indication, and the inbound interface information for the target service flow to enter the encapsulation node, the inbound interface information indicates to the encapsulation node that the target service flow enters an inbound interface of the encapsulation node; and
the automatic detection start indication is used for indicating the encapsulation node to carry an automatic detection identifier in an IOAM header of the target message in response to performing IOAM encapsulation on the target message, and the automatic detection identifier is used for indicating whether a node through which the target message flows needs to automatically perform IOAM detection on the target message without receiving instance configuration information from the detection control device.

2. An in-band Operation Administration and Maintenance, IOAM, detection processing method, applied to an encapsulation node (11), comprising:
receiving, by the encapsulation node, first configuration information sent by a detection control device (14), the first configuration information comprising a flow identifier of a target service flow, a service flow identification feature, and a marking cycle;
identifying, by the encapsulation node, according to the service flow identification feature, the target service flow from service flows entering the node, and performing IOAM encapsulation on a message of the target service flow, an IOAM header which is added during the IOAM encapsulation carrying the flow identifier of the target service flow, the IOAM header of the message arriving at the encapsulation node within the marking cycle in the target service flow further carrying a target marker for indicating that the message is a target message, the IOAM header allowing a node through which the target message flows to automatically generate a detection report instance without receiving instance configuration information sent by the detection control device, the flow identifier of the target service flow is for each node in a target IOAM domain to uniquely identify the target service flow; and
sending, by the encapsulation node, the target message to a next node (13, 12);
**characterized in that**, the first configuration information further comprises inbound interface information and an automatic detection start indication, and the inbound interface information for the target service flow to enter the encapsulation node, the inbound interface information indicates to the encapsulation node that the target service flow enters an inbound interface of the encapsulation node; and
the automatic detection start indication is used for indicating the encapsulation node to carry an automatic detection identifier in an IOAM header of the target message in response to performing IOAM encapsulation on the target message, and the automatic detection identifier is used for indicating whether a node through which the target message flows needs to automatically perform IOAM detection on the target message without receiving instance configuration information from the detection control device.

3. The IOAM detection processing method of claim 2, wherein performing IOAM encapsulation on a message of the target service flow comprises carrying at least one of the automatic detection identifier or the marking cycle in the IOAM header, the automatic detection identifier being used for indicating whether the node through which the target message flows needs to automatically perform IOAM detection on the target message without receiving the instance configuration information from the detection control device; and the IOAM header further comprises a marking cycle for indicating the time for each node in a target domain to report data to the detection control device.

4. The IOAM detection processing method of claim 2, wherein
identifying, by the encapsulation node according to the service flow identification feature, the target service flow from service flows entering the node comprises:
monitoring, by the encapsulation node, service flows entering the flow from an inbound interface corresponding to the inbound interface information, and identifying the target service flow corresponding to the service flow identification feature.

5. The IOAM detection processing method of any one of claims 2 to 4, further comprising:
generating, by the encapsulation node, an outbound detection report instance of the target service flow at the encapsulation node according to the flow identifier in the target message and an outbound interface of the target service flow at the encapsulation node.

6. The IOAM detection processing method of claim 5, before generating, by the encapsulation node, an outbound detection report instance of the target service flow at the node according to the flow identifier in the target message and an outbound interface of the target service flow at the node, further comprising:
determining, by the encapsulation node, that the IOAM header of the target message further comprises a valid automatic detection identifier for indicating the node through which the target message flows to automatically perform IOAM detection on the target message without receiving the instance configuration information from the detection control device.

7. The IOAM detection processing method of claim 2 comprising:
determining, by the transmission node according to the flow identifier and the target marker in the IOAM header of the message received, that the message is the target message of the target service flow needing to be detected by IOAM;
generating, by the transmission node, the detection report instance of the target service flow at the node according to the flow identifier in the IOAM header of the target message and an interface through which the target service flow flows at the node, the detection report instance comprising at least one of an inbound detection report instance or an outbound detection report instance; and
sending, by the transmission node, the target message to a next node (13, 12).

8. The IOAM detection processing method of claim 7, prior to generating, by the transmission node, a detection report instance of the target service flow at the node according to the flow identifier in the IOAM header of the target message and an interface through which the target service flow flows at the node, further comprising:
determining, by the transmission node, that the IOAM header of the target message further comprises a valid automatic detection identifier for indicating a node through which the target message flows to automatically perform IOAM detection on the target message without receiving instance configuration information from the detection control device.

9. The IOAM detection processing method of claim 2 comprising:
determining, by the decapsulation node according to the flow identifier and the target marker in the IOAM header of the message received, that the message is the target message of the target service flow needing to be detected by IOAM;
generating, by the decapsulation node, the detection report instance of the target service flow at the node according to the flow identifier in the IOAM header of the target message and an interface through which the target service flow flows at the node, the detection report instance comprising at least one of an inbound detection report instance or an outbound detection report instance; and
performing, by the decapsulation node according to indication of second configuration information, IOAM decapsulation on the message of the target service flow, and sending the message after IOAM decapsulation to a next node, the second configuration information being sent by the detection control device, comprising the flow identifier of the target service flow.

10. The IOAM detection processing method of claim 9, before the generating, by the decapsulation node, a detection report instance of the target service flow at the node according to the flow identifier in the IOAM header of the target message and an interface through which the target service flow flows at the node, further comprising:
determining, by the decapsulation node, that the IOAM header of the target message further comprises a valid automatic detection identifier for indicating a node through which the target message flows to automatically perform IOAM detection on the target message without receiving instance configuration information from the detection control device.

11. The IOAM detection processing method of claim 9 or 10, wherein the second configuration information further comprises exit check information for indicating to the decapsulation node an outbound interface of the target service flow on the decapsulation node expected by the detection control device; and
after the decapsulation node performs IOAM decapsulation on the target message and sends the target message to the next node, the method further comprises:
matching, by the decapsulation node, an actual outbound interface of the target message on the decapsulation node with the expected outbound interface indicated by the exit check information; and
reporting, by the decapsulation node, a matching result to the detection control device.

12. A detection control device (14), comprising a first processor (121), a first memory (122), and a first communication bus (123), wherein:
the first communication bus is configured to realize connection communication between the first processor and the first memory; and
the first processor is configured to execute one or more programs stored in the first memory, so as to perform steps of the IOAM detection configuration method of claim 1.

13. A communication device (11, 12, 13), comprising a second processor (131), a second memory (132), and a second communication bus (133), wherein:
the second communication bus is configured to realize connection communication between the second processor and the second memory; and
the second processor is configured to execute a IOAM detection processing program stored in the second memory, so as to perform steps in the IOAM detection processing method of any one of claims 2 to 11.

14. A storage medium, wherein the storage medium stores an IOAM detection configuration program, and the IOAM detection configuration program is executable by one or more processors to cause the one or more processors to perform steps of the IOAM detection configuration method of claim 1.

15. A storage medium, wherein the storage medium stores an IOAM detection processing program, the IOAM detection processing program is executable by one or more processors to cause the one or more processors to perform steps of the IOAM detection processing method of any one of claims 2 to 11.

## Patentansprüche

1. Verfahren zur Detektionskonfiguration für In-Band Operation Administration and Maintenance, IOAM-Detektionskonfiguration, das auf eine Detektionssteuerungsvorrichtung (14) angewendet ist, umfassend:
Senden von Konfigurationsinformationen durch die Detektionssteuerungsvorrichtung an zu konfigurierende Knoten, die aus einem Kapselungsknoten (11) bzw. einem Entkapselungsknoten (13) in einer Ziel-IOAM-Domäne (10) bestehen, was Senden von ersten Konfigurationsinformationen an den Kapselungsknoten in der Ziel-IOAM-Domäne und Senden von zweiten Konfigurationsinformationen an den Entkapselungsknoten in der Ziel-IOAM-Domäne umfasst, wobei die Ziel-IOAM-Domäne eine IOAM-Domäne ist, die eine IOAM-Detektion an einem Zieldienstablauf durchführt; wobei die ersten Konfigurationsinformationen eine Ablaufidentifizierung des Zieldienstablaufs, ein Dienstablaufidentifikationsmerkmal und einen Markierungszyklus umfassen, wobei das Dienstablaufidentifikationsmerkmal durch den Kapselungsknoten verwendet wird, um den Zieldienstablauf aus in den Knoten eintretenden Zieldienstabläufen zu identifizieren, wobei der Markierungszyklus zum Angeben des Kapselungsknotens verwendet wird, um eine innerhalb des Markierungszyklus ankommende Nachricht in dem Zieldienstablauf als Zielnachricht zu markieren; und wobei die zweiten Konfigurationsinformationen die Ablaufidentifizierung des Zieldienstablaufs umfassen, die Ablaufidentifizierung des Zieldienstablaufs dazu dient, dass jeder Knoten in der Ziel-IOAM-Domäne den Zieldienstablauf eindeutig identifiziert;
**dadurch gekennzeichnet, dass** die ersten Konfigurationsinformationen ferner Eingangsschnittstelleninformationen und eine automatische Detektionsstartangabe und die Eingangsschnittstelleninformationen für den Zieldienstablauf, der in den Kapselungsknoten einzutreten hat, umfassen, die Eingangsschnittstelleninformationen dem Kapselungsknoten angeben, dass der Zieldienstablauf in eine Eingangsschnittstelle des Kapselungsknotens eintritt; und
die automatische Detektionsstartangabe zum Angeben des Kapselungsknotens verwendet wird, der eine automatische Detektionsidentifizierung in einem IOAM-Header der Zielnachricht als Reaktion auf ein Durchführen einer IOAM-Kapselung an der Zielnachricht trägt, und die automatische Detektionsidentifizierung zum Angeben verwendet wird, ob ein Knoten, durch den die Zielnachricht verläuft, automatisch eine IOAM-Detektion an der Zielnachricht durchführen muss, ohne Instanzkonfigurationsinformationen von der Detektionssteuerungsvorrichtung zu empfangen.

2. Verfahren zur Detektionsverarbeitung für In-Band Operation Administration and Maintenance, IOAM-Detektionsverarbeitung, das auf einen Kapselungsknoten (11) angewendet ist, umfassend:
Empfangen von durch eine Detektionssteuerungsvorrichtung (14) gesendeten ersten Konfigurationsinformationen durch den Kapselungsknoten, wobei die ersten Konfigurationsinformationen eine Ablaufidentifizierung eines Zieldienstablaufs, ein Dienstablaufidentifikationsmerkmal und einen Markierungszyklus umfassen;
Identifizieren des Zieldienstablaufs aus in den Knoten eintretenden Zieldienstabläufen durch den Kapselungsknoten gemäß dem Dienstablaufidentifikationsmerkmal und Durchführen einer IOAM-Kapselung an einer Nachricht des Zieldienstablaufs, wobei ein IOAM-Header, der während der IOAM-Kapselung hinzugefügt wird, die Ablaufidentifizierung des Zieldienstablaufs trägt, wobei der IOAM-Header der Nachricht, die innerhalb des Markierungszyklus in dem Zieldienstablauf an dem Kapselungsknoten ankommt, ferner eine Zielmarkierung zum Angeben trägt, dass die Nachricht eine Zielnachricht ist, wobei der IOAM-Header zulässt, dass ein Knoten, durch den die Zielnachricht verläuft, automatisch eine Detektionsmeldeinstanz generiert, ohne durch die Detektionssteuerungsvorrichtung gesendete Instanzkonfigurationsinformationen zu empfangen, die Ablaufidentifizierung des Zieldienstablaufs dazu dient, dass jeder Knoten in einer Ziel-IOAM-Domäne den Zieldienstablauf eindeutig identifiziert; und
Senden der Zielnachricht durch den Kapselungsknoten an einen nächsten Knoten (13, 12);
**dadurch gekennzeichnet, dass** die ersten Konfigurationsinformationen ferner Eingangsschnittstelleninformationen und eine automatische Detektionsstartangabe und die Eingangsschnittstelleninformationen für den Zieldienstablauf, der in den Kapselungsknoten einzutreten hat, umfassen, die Eingangsschnittstelleninformationen dem Kapselungsknoten angeben, dass der Zieldienstablauf in eine Eingangsschnittstelle des Kapselungsknotens eintritt; und
die automatische Detektionsstartangabe zum Angeben des Kapselungsknotens verwendet wird, der eine automatische Detektionsidentifizierung in einem IOAM-Header der Zielnachricht als Reaktion auf ein Durchführen einer IOAM-Kapselung an der Zielnachricht trägt, und die automatische Detektionsidentifizierung zum Angeben verwendet wird, ob ein Knoten, durch den die Zielnachricht verläuft, automatisch eine IOAM-Detektion an der Zielnachricht durchführen muss, ohne Instanzkonfigurationsinformationen von der Detektionssteuerungsvorrichtung zu empfangen.

3. Verfahren zur IOAM-Detektionsverarbeitung nach Anspruch 2, wobei das Durchführen einer IOAM-Kapselung an einer Nachricht des Zieldienstablaufs Tragen von mindestens einem von der automatischen Detektionsidentifizierung oder dem Markierungszyklus in dem IOAM-Header umfasst, wobei die automatische Detektionsidentifizierung zum Angeben verwendet wird, ob der Knoten, durch den die Zielnachricht verläuft, automatisch eine IOAM-Detektion an der Zielnachricht durchführen muss, ohne die Instanzkonfigurationsinformationen von der Detektionssteuerungsvorrichtung zu empfangen; und der IOAM-Header ferner einen Markierungszyklus zum Angeben der Zeit für jeden Knoten in einer Zieldomäne, um Daten an die Detektionssteuerungsvorrichtung zu melden, umfasst.

4. Verfahren zur IOAM-Detektionsverarbeitung nach Anspruch 2, wobei
das Identifizieren des Zieldienstablaufs aus in den Knoten eintretenden Zieldienstabläufen durch den Kapselungsknoten gemäß dem Dienstablaufidentifikationsmerkmal Folgendes umfasst:
Überwachen von Dienstabläufen, die von einer Eingangsschnittstelle, die den Eingangsschnittstelleninformationen entspricht, in den Ablauf eintreten, durch den Kapselungsknoten und Identifizieren des Zieldienstablaufs, der dem Dienstablaufidentifikationsmerkmal entspricht.

5. Verfahren zur IOAM-Detektionsverarbeitung nach einem der Ansprüche 2 bis 4, ferner umfassend:
Generieren einer Ausgangsdetektionsmeldeinstanz des Zieldienstablaufs an dem Kapselungsknoten durch den Kapselungsknoten gemäß der Ablaufidentifizierung in der Zielnachricht und einer Ausgangsschnittstelle des Zieldienstablaufs an dem Kapselungsknoten.

6. Verfahren zur IOAM-Detektionsverarbeitung nach Anspruch 5, das vor dem Generieren einer Ausgangsdetektionsmeldeinstanz des Zieldienstablaufs an dem Knoten durch den Kapselungsknoten gemäß der Ablaufidentifizierung in der Zielnachricht und einer Ausgangsschnittstelle des Zieldienstablaufs an dem Knoten ferner Folgendes umfasst:
Bestimmen durch den Kapselungsknoten, dass der IOAM-Header der Zielnachricht ferner eine gültige automatische Detektionsidentifizierung zum Angeben des Knotens umfasst, durch den die Zielnachricht verläuft, um automatisch eine IOAM-Detektion an der Zielnachricht durchzuführen, ohne die Instanzkonfigurationsinformationen von der Detektionssteuerungsvorrichtung zu empfangen.

7. Verfahren zur IOAM-Detektionsverarbeitung nach Anspruch 2, umfassend:
Bestimmen durch den Übertragungsknoten gemäß der Ablaufidentifizierung und der Zielmarkierung in dem IOAM-Header der empfangenen Nachricht, dass die Nachricht die Zielnachricht des Zieldienstablaufs ist, die durch IOAM detektiert werden muss;
Generieren der Detektionsmeldeinstanz des Zieldienstablaufs an dem Knoten durch den Übertragungsknoten gemäß der Ablaufidentifizierung in dem IOAM-Header der Zielnachricht und einer Schnittstelle, durch die der Zieldienstablauf an dem Knoten verläuft, wobei die Detektionsmeldeinstanz mindestens eine von einer Eingangsdetektionsmeldeinstanz oder einer Ausgangsdetektionsmeldeinstanz umfasst; und
Senden der Zielnachricht durch den Übertragungsknoten an einen nächsten Knoten (13, 12).

8. Verfahren zur IOAM-Detektionsverarbeitung nach Anspruch 7, das vor dem Generieren einer Detektionsmeldeinstanz des Zieldienstablaufs an dem Knoten durch den Übertragungsknoten gemäß der Ablaufidentifizierung in dem IOAM-Header der Zielnachricht und einer Schnittstelle, durch die der Zieldienstablauf an dem Knoten verläuft, ferner Folgendes umfasst:
Bestimmen durch den Übertragungsknoten, dass der IOAM-Header der Zielnachricht ferner eine gültige automatische Detektionsidentifizierung zum Angeben eines Knotens umfasst, durch den die Zielnachricht verläuft, um automatisch eine IOAM-Detektion an der Zielnachricht durchzuführen, ohne Instanzkonfigurationsinformationen von der Detektionssteuerungsvorrichtung zu empfangen.

9. Verfahren zur IOAM-Detektionsverarbeitung nach Anspruch 2, umfassend:
Bestimmen durch den Entkapselungsknoten gemäß der Ablaufidentifizierung und der Zielmarkierung in dem IOAM-Header der empfangenen Nachricht, dass die Nachricht die Zielnachricht des Zieldienstablaufs ist, die durch IOAM detektiert werden muss;
Generieren der Detektionsmeldeinstanz des Zieldienstablaufs an dem Knoten durch den Entkapselungsknoten gemäß der Ablaufidentifizierung in dem IOAM-Header der Zielnachricht und einer Schnittstelle, durch die der Zieldienstablauf an dem Knoten verläuft, wobei die Detektionsmeldeinstanz mindestens eine von einer Eingangsdetektionsmeldeinstanz oder einer Ausgangsdetektionsmeldeinstanz umfasst; und
Durchführen einer IOAM-Entkapselung an der Nachricht des Zieldienstablaufs durch den Entkapselungsknoten gemäß einer Angabe von zweiten Konfigurationsinformationen und Senden der Nachricht nach der IOAM-Entkapselung an einen nächsten Knoten, wobei die zweiten Konfigurationsinformationen durch die Detektionssteuerungsvorrichtung gesendet werden und die Ablaufidentifizierung des Zieldienstablaufs umfassen.

10. Verfahren zur IOAM-Detektionsverarbeitung nach Anspruch 9, das vor dem Generieren einer Detektionsmeldeinstanz des Zieldienstablaufs an dem Knoten durch den Entkapselungsknoten gemäß der Ablaufidentifizierung in dem IOAM-Header der Zielnachricht und einer Schnittstelle, durch die der Zieldienstablauf an dem Knoten verläuft, ferner Folgendes umfasst:
Bestimmen durch den Entkapselungsknoten, dass der IOAM-Header der Zielnachricht ferner eine gültige automatische Detektionsidentifizierung zum Angeben eines Knotens umfasst, durch den die Zielnachricht verläuft, um automatisch eine IOAM-Detektion an der Zielnachricht durchzuführen, ohne Instanzkonfigurationsinformationen von der Detektionssteuerungsvorrichtung zu empfangen.

11. Verfahren zur IOAM-Detektionsverarbeitung nach Anspruch 9 oder 10, wobei die zweiten Konfigurationsinformationen ferner Austrittsprüfungsinformationen umfassen, um dem Entkapselungsknoten eine Ausgangsschnittstelle des Zieldienstablaufs an dem Entkapselungsknoten anzugeben, die durch die Detektionssteuerungsvorrichtung erwartet wird; und
nachdem der Entkapselungsknoten eine IOAM-Entkapselung an der Zielnachricht durchführt und die Zielnachricht an den nächsten Knoten sendet, das Verfahren ferner Folgendes umfasst:
Abgleichen einer tatsächlichen Ausgangsschnittstelle der Zielnachricht an dem Entkapselungsknoten durch den Entkapselungsknoten mit der erwarteten Ausgangsschnittstelle, die durch die Austrittsprüfungsinformationen angegeben ist; und
Melden eines Abgleichsergebnisses durch den Entkapselungsknoten an die Detektionssteuerungsvorrichtung.

12. Detektionssteuerungsvorrichtung (14), die einen ersten Prozessor (121), einen ersten Speicher (122) und einen ersten Kommunikationsbus (123) umfasst, wobei:
der erste Kommunikationsbus dazu konfiguriert ist, eine Verbindungskommunikation zwischen dem ersten Prozessor und dem ersten Speicher zu realisieren; und
der erste Prozessor dazu konfiguriert ist, ein oder mehrere Programme auszuführen, die in dem ersten Speicher gespeichert sind, um Schritte des Verfahrens zur IOAM-Detektionskonfiguration nach Anspruch 1 durchzuführen.

13. Kommunikationsvorrichtung (11, 12, 13), die einen zweiten Prozessor (131), einen zweiten Speicher (132) und einen zweiten Kommunikationsbus (133) umfasst, wobei:
der zweite Kommunikationsbus dazu konfiguriert ist, eine Verbindungskommunikation zwischen dem zweiten Prozessor und dem zweiten Speicher zu realisieren; und
der zweite Prozessor dazu konfiguriert ist, ein Programm zur IOAM-Detektionsverarbeitung auszuführen, das in dem zweiten Speicher gespeichert ist, um Schritte in dem Verfahren zur IOAM-Detektionsverarbeitung nach einem der Ansprüche 2 bis 11 durchzuführen.

14. Speichermedium, wobei das Speichermedium ein Programm zur IOAM-Detektionskonfiguration speichert und das Programm zur IOAM-Detektionskonfiguration durch einen oder mehrere Prozessoren ausführbar ist, um zu veranlassen, dass der eine oder die mehreren Prozessoren Schritte des Verfahrens zur IOAM-Detektionskonfiguration nach Anspruch 1 durchführen.

15. Speichermedium, wobei das Speichermedium ein Programm zur IOAM-Detektionsverarbeitung speichert, das Programm zur IOAM-Detektionsverarbeitung durch einen oder mehrere Prozessoren ausführbar ist, um zu veranlassen, dass der eine oder die mehreren Prozessoren Schritte des Verfahrens zur IOAM-Detektionsverarbeitung nach einem der Ansprüche 2 bis 11 durchführen.

## Revendications

1. Procédé de configuration de détection d'administration et de maintenance de fonctionnement intrabande, IOAM, appliqué à un dispositif de commande de détection (14), comprenant :
l'envoi, par le dispositif de commande de détection, d'informations de configuration à des nœuds à configurer composés d'un nœud d'encapsulation (11) et d'un nœud de décapsulation (13) dans un domaine IOAM cible (10), respectivement, qui comprend l'envoi de premières informations de configuration au nœud d'encapsulation dans le domaine IOAM cible et l'envoi de secondes informations de configuration au nœud de décapsulation dans le domaine IOAM cible, le domaine IOAM cible étant un domaine IOAM réalisant une détection IOAM sur un flux de service cible ; les premières informations de configuration comprenant un identifiant de flux du flux de service cible, une caractéristique d'identification de flux de service et un cycle de marquage, la caractéristique d'identification de flux de service étant utilisée par le nœud d'encapsulation pour identifier le flux de service cible à partir de flux de service entrant dans le nœud, le cycle de marquage étant utilisé pour indiquer le nœud d'encapsulation pour marquer un message arrivant dans le cycle de marquage dans le flux de service cible en tant que message cible ; et les secondes informations de configuration comprenant l'identifiant de flux du flux de service cible, l'identifiant de flux du flux de service cible permet à chaque nœud dans le domaine IOAM cible d'identifier de manière unique le flux de service cible ;
**caractérisé en ce que** les premières informations de configuration comprennent en outre des informations d'interface entrantes et une indication de début de détection automatique, et les informations d'interface entrantes pour que le flux de service cible entre dans le nœud d'encapsulation, les informations d'interface entrantes indiquent au nœud d'encapsulation que le flux de service cible entre dans une interface entrante du nœud d'encapsulation ; et
l'indication de début de détection automatique est utilisée pour indiquer au nœud d'encapsulation de porter un identifiant de détection automatique dans un en-tête IOAM du message cible en réponse à la réalisation d'une encapsulation IOAM sur le message cible, et l'identifiant de détection automatique est utilisé pour indiquer si un nœud à travers lequel le message cible s'écoule doit réaliser automatiquement une détection IOAM sur le message cible sans recevoir d'informations de configuration d'instance de la part du dispositif de commande de détection.

2. Procédé de traitement de détection d'administration et de maintenance de fonctionnement intrabande, IOAM, appliqué à un nœud d'encapsulation (11), comprenant :
la réception, par le nœud d'encapsulation, de premières informations de configuration envoyées par un dispositif de commande de détection (14), les premières informations de configuration comprenant un identifiant de flux d'un flux de service cible, une caractéristique d'identification de flux de service et un cycle de marquage ;
l'identification, par le nœud d'encapsulation, selon la caractéristique d'identification de flux de service, du flux de service cible à partir de flux de service entrant dans le nœud, et la réalisation d'une encapsulation IOAM sur un message du flux de service cible, un en-tête IOAM qui est ajouté pendant l'encapsulation IOAM portant l'identifiant de flux du flux de service cible, l'en-tête IOAM du message arrivant au nœud d'encapsulation dans le cycle de marquage dans le flux de service cible portant en outre un marqueur cible pour indiquer que le message est un message cible, l'en-tête IOAM permettant à un nœud à travers lequel le message cible circule de générer automatiquement une instance de rapport de détection sans recevoir d'informations de configuration d'instance envoyées par le dispositif de commande de détection, l'identifiant de flux du flux de service cible permet à chaque nœud dans un domaine IOAM cible d'identifier de manière unique le flux de service cible ; et
l'envoi, par le nœud d'encapsulation, du message cible à un nœud suivant (13, 12) ;
**caractérisé en ce que** les premières informations de configuration comprennent en outre des informations d'interface entrantes et une indication de début de détection automatique, et les informations d'interface entrantes pour que le flux de service cible entre dans le nœud d'encapsulation, les informations d'interface entrantes indiquent au nœud d'encapsulation que le flux de service cible entre dans une interface entrante du nœud d'encapsulation ; et
l'indication de début de détection automatique est utilisée pour indiquer au nœud d'encapsulation de porter un identifiant de détection automatique dans un en-tête IOAM du message cible en réponse à la réalisation d'une encapsulation IOAM sur le message cible, et l'identifiant de détection automatique est utilisé pour indiquer si un nœud à travers lequel le message cible s'écoule doit réaliser automatiquement une détection IOAM sur le message cible sans recevoir d'informations de configuration d'instance de la part du dispositif de commande de détection.

3. Procédé de traitement de détection IOAM de la revendication 2, dans lequel la réalisation d'une encapsulation IOAM sur un message du flux de service cible comprend le port d'au moins l'un de l'identifiant de détection automatique ou du cycle de marquage dans l'en-tête IOAM, l'identifiant de détection automatique étant utilisé pour indiquer si le nœud à travers lequel le message cible s'écoule doit réaliser automatiquement une détection IOAM sur le message cible sans recevoir les informations de configuration d'instance de la part du dispositif de commande de détection ; et l'en-tête IOAM comprend en outre un cycle de marquage pour indiquer l'heure à laquelle chaque nœud dans un domaine cible doit rapporter des données au dispositif de commande de détection.

4. Procédé de traitement de détection IOAM de la revendication 2, dans lequel
l'identification, par le nœud d'encapsulation selon la caractéristique d'identification de flux de service, du flux de service cible à partir de flux de service entrant dans le nœud comprend :
la surveillance, par le nœud d'encapsulation, de flux de service entrant dans le flux à partir d'une interface entrante correspondant aux informations d'interface entrante, et l'identification du flux de service cible correspondant à la caractéristique d'identification de flux de service.

5. Procédé de traitement de détection IOAM de l'une quelconque des revendications 2 à 4, comprenant en outre :
la génération, par le nœud d'encapsulation, d'une instance de rapport de détection sortante du flux de service cible au niveau du nœud d'encapsulation selon l'identifiant de flux dans le message cible et une interface sortante du flux de service cible au niveau du nœud d'encapsulation.

6. Procédé de traitement de détection IOAM de la revendication 5, avant la génération, par le nœud d'encapsulation, d'une instance de rapport de détection sortante du flux de service cible au niveau du nœud selon l'identifiant de flux dans le message cible et une interface sortante du flux de service cible au niveau du nœud, comprenant en outre :
la détermination, par le nœud d'encapsulation, du fait que l'en-tête IOAM du message cible comprend en outre un identifiant de détection automatique valide pour indiquer au nœud à travers lequel le message cible s'écoule de réaliser automatiquement une détection IOAM sur le message cible sans recevoir les informations de configuration d'instance de la part du dispositif de commande de détection.

7. Procédé de traitement de détection IOAM de la revendication 2, comprenant :
la détermination, par le nœud de transmission selon l'identifiant de flux et le marqueur cible dans l'en-tête IOAM du message reçu, du fait que le message est le message cible du flux de service cible devant être détecté par IOAM ;
la génération, par le nœud de transmission, de l'instance de rapport de détection du flux de service cible au niveau du nœud selon l'identifiant de flux dans l'en-tête IOAM du message cible et une interface à travers laquelle le flux de service cible circule au niveau du nœud, l'instance de rapport de détection comprenant au moins l'une d'une instance de rapport de détection entrante ou d'une instance de rapport de détection sortante ; et
l'envoi, par le nœud de transmission, du message cible à un nœud suivant (13, 12).

8. Procédé de traitement de détection IOAM de la revendication 7, avant la génération, par le nœud de transmission, d'une instance de rapport de détection du flux de service cible au niveau du nœud selon l'identifiant de flux dans l'en-tête IOAM du message cible et une interface à travers laquelle le flux de service cible s'écoule au niveau du nœud, comprenant en outre :
la détermination, par le nœud de transmission, du fait que l'en-tête IOAM du message cible comprend en outre un identifiant de détection automatique valide pour indiquer à un nœud à travers lequel le message cible s'écoule de réaliser automatiquement une détection IOAM sur le message cible sans recevoir d'informations de configuration d'instance de la part du dispositif de commande de détection.

9. Procédé de traitement de détection IOAM de la revendication 2, comprenant :
la détermination, par le nœud de décapsulation selon l'identifiant de flux et le marqueur cible dans l'en-tête IOAM du message reçu, du fait que le message est le message cible du flux de service cible devant être détecté par IOAM ;
la génération, par le nœud de décapsulation, de l'instance de rapport de détection du flux de service cible au niveau du nœud selon l'identifiant de flux dans l'en-tête IOAM du message cible et une interface à travers laquelle le flux de service cible circule au niveau du nœud, l'instance de rapport de détection comprenant au moins l'une d'une instance de rapport de détection entrante ou d'une instance de rapport de détection sortante ; et
la réalisation, par le nœud de décapsulation selon l'indication de secondes informations de configuration, d'une décapsulation IOAM sur le message du flux de service cible, et l'envoi du message après la décapsulation IOAM à un nœud suivant, les secondes informations de configuration étant envoyées par le dispositif de commande de détection, comprenant l'identifiant de flux du flux de service cible.

10. Procédé de traitement de détection IOAM de la revendication 9, avant la génération, par le nœud de décapsulation, d'une instance de rapport de détection du flux de service cible au niveau du nœud selon l'identifiant de flux dans l'en-tête IOAM du message cible et une interface à travers laquelle le flux de service cible s'écoule au niveau du nœud, comprenant en outre :
la détermination, par le nœud de décapsulation, du fait que l'en-tête IOAM du message cible comprend en outre un identifiant de détection automatique valide pour indiquer à un nœud à travers lequel le message cible s'écoule de réaliser automatiquement une détection IOAM sur le message cible sans recevoir d'informations de configuration d'instance de la part du dispositif de commande de détection.

11. Procédé de traitement de détection IOAM de la revendication 9 ou 10, dans lequel les secondes informations de configuration comprennent en outre des informations de vérification de sortie pour indiquer au nœud de décapsulation une interface sortante du flux de service cible sur le nœud de décapsulation attendue par le dispositif de commande de détection ; et
après que le nœud de décapsulation a réalisé une décapsulation IOAM sur le message cible et a envoyé le message cible au nœud suivant, le procédé comprend en outre :
la mise en correspondance, par le nœud de décapsulation, d'une interface sortante réelle du message cible sur le nœud de décapsulation avec l'interface sortante attendue indiquée par les informations de vérification de sortie ; et
le rapport, par le nœud de décapsulation, d'un résultat de correspondance au dispositif de commande de détection.

12. Dispositif de commande de détection (14) comprenant un premier processeur (121), une première mémoire (122) et un premier bus de communication (123), dans lequel :
le premier bus de communication est configuré pour réaliser une communication de connexion entre le premier processeur et la première mémoire ; et
le premier processeur est configuré pour exécuter un ou plusieurs programmes stockés dans la première mémoire, de façon à réaliser les étapes du procédé de configuration de détection IOAM de la revendication 1.

13. Dispositif de communication (11, 12, 13) comprenant un second processeur (131), une seconde mémoire (132) et un second bus de communication (133), dans lequel :
le second bus de communication est configuré pour réaliser une communication de connexion entre le second processeur et la seconde mémoire ; et
le second processeur est configuré pour exécuter un programme de traitement de détection IOAM stocké dans la seconde mémoire, de façon à réaliser les étapes du procédé de traitement de détection IOAM de l'une quelconque des revendications 2 à 11.

14. Support de stockage, dans lequel le support de stockage stocke un programme de configuration de détection IOAM, et le programme de configuration de détection IOAM est exécutable par un ou plusieurs processeurs pour amener les un ou plusieurs processeurs à réaliser les étapes du procédé de configuration de détection IOAM de la revendication 1.

15. Support de stockage, dans lequel le support de stockage stocke un programme de traitement de détection IOAM, le programme de traitement de détection IOAM est exécutable par un ou plusieurs processeurs pour amener les un ou plusieurs processeurs à réaliser des étapes du procédé de traitement de détection IOAM de l'une quelconque des revendications 2 à 11.
